# FASCICULE DE BREVET EUROPEEN

(11) **EP 3 631 991 B1**
(45) Date de publication et mention de la délivrance du brevet: **22.09.2021**
(21) Numéro de dépôt: 18724285.4
(22) Date de dépôt: 22.05.2018
(51) Int. Cl.: H04B 3/54

(54) **PROCÉDÉ DE SELECTION AUTOMATIQUE D'UNE BANDE DE FRÉQUENCES**
VERFAHREN ZUR AUTOMATISCHEN AUSWAHL EINES FREQUENZBANDES
METHOD FOR AUTOMATICALLY SELECTING A FREQUENCY BAND

(30) Priorité: 31.05.2017 FR 1754788
(43) Date de publication de la demande: 08.04.2020
(73) Titulaire: Sagemcom Energy & Telecom SAS, 92500 Rueil-Malmaison (FR)
(72) Inventeur: TEBOULLE, Henri, 92500 Rueil Malmaison (FR); ROTER, Ziv, 92500 Rueil Malmaison (FR); RAZAZIAN, Kaveh, 92500 Rueil Malmaison (FR); DJAFRI, Rahid, 92500 Rueil Malmaison (FR)
(74) Mandataire: Cabinet Le Guen Maillet
(86) Numéro de dépôt international: PCT/EP2018/063360
(87) Numéro de publication internationale: WO 2018/219715

(56) Documents cités:
- WO-A1-2016/166238
- US-A- 5 245 633
- US-A1- 2012 134 395
- US-A1- 2016 127 056
- US-A1- 2016 127 515

## Description

La présente invention concerne le domaine des réseaux de communications maillés, c'est-à-dire un réseau de communication dans lequel différents dispositifs électroniques du réseau sont connectés pair à pair. L'invention concerne plus particulièrement le domaine des réseaux de communications par courant porteur en ligne, notamment les réseaux de communications conformes à la norme G3-PLC (« G3-*Power Line Communication* » en anglais) développée par la « G3-PLC Alliance ».

Un réseau de communication maillé (ci-après « réseau ») conforme à la norme G3-PLC comprend typiquement un premier dispositif électronique, dit concentrateur de données (ci-après « concentrateur »), placé à la racine du réseau, et une pluralité de dispositifs électroniques, par exemple des compteurs électriques communicants ou « *smart meters* » en anglais (ci-après « compteurs »). Chaque dispositif électronique, le concentrateur comme les compteurs, est aussi appelé un nœud du réseau.

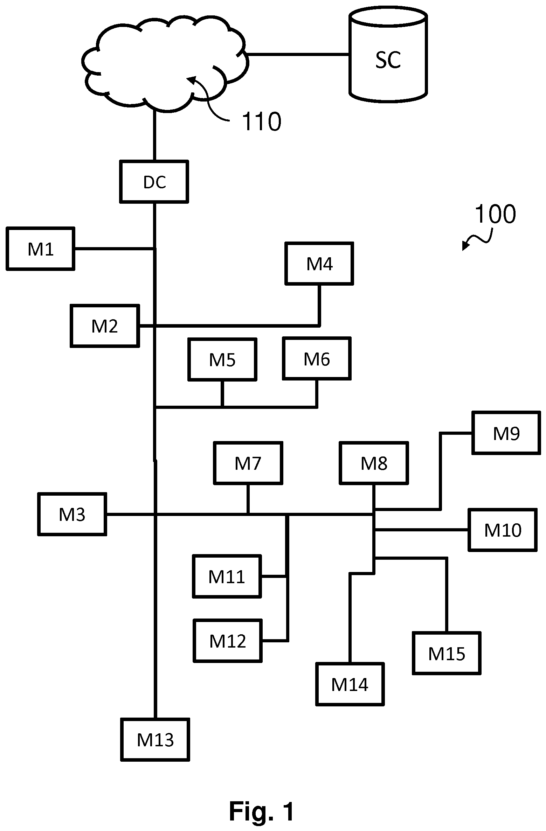

La **Fig. 1** illustre un tel réseau de communication maillé 100. Un concentrateur de données DC est un nœud particulier du réseau de communication car il est connecté, via un réseau de communication 110, à au moins un dispositif de contrôle SC d'un système d'information d'un opérateur opérant le réseau de communication maillé 100. Le réseau de communication 110 peut être le réseau Internet ou un réseau de communication mobile, par exemple conforme à une norme GSM (« *Global System for Mobile communications* » en anglais), UMTS (« *Universal Mobile Télécommunications System* » en anglais) ou LTE (« *Long Term Evolution* » en anglais). Les différents autres nœuds du réseau de communication maillé 100 sont typiquement des compteurs communicants, M1, M2, M3, ... M15. Tous les nœuds, ou dispositifs électroniques, DC, M1, M2, M3, M15, sont connectés à un même réseau électrique et, conformément par exemple aux spécifications de la norme G3-PLC, communiquent via une même bande de fréquences. Cette bande de fréquences est par exemple une bande de fréquences définie par le « *Comité Européen de Normalisation Électrotechnique (CENELEC)* » (bande de fréquences dite « CENELEC A » ou « CENELEC B », selon la norme « CENELEC EN50065-1 »), par la *« Japanese Association of Radio Industries and Businesses (ARIB)* » (en anglais ; bande de fréquences dite « ARIB ») ou bien par la « *US Federal Communications Commission (FCC)* » (en anglais ; bande de fréquences dite « FCC ». Chaque nœud du réseau de communication maillé 100, particulièrement les compteurs communicants M1, M2, M3, ... M15, peut être compatible avec possiblement plusieurs bandes de fréquences, et ainsi être utilisé avec l'une ou l'autre des bandes de fréquences. Néanmoins, pour des raisons d'optimisation du coût de fabrication des dispositifs électroniques, chaque nœud ne peut utiliser qu'une seule bande de fréquences à la fois pour communiquer sur le réseau de communication maillé 100. Pouvoir utiliser plusieurs bandes de fréquences à la fois nécessiterait de disposer, pour un nœud, d'un module de communications plus complexe, par exemple comprenant deux modems, donc plus onéreux. Plus prosaïquement, la norme G3-PLC ne prévoit pas aujourd'hui l'utilisation simultanée de plusieurs bandes de fréquences. Ainsi, tous les nœuds DC, M1, M2, M3, ... M15 du réseau de communication maillé 100 communiquent en utilisant une même et unique bande de fréquences prédéfinie, choisie idéalement pour permettre de bonnes performances.

Cependant, les conditions environnementales du réseau pouvant par exemple varier au cours du temps, il peut arriver que la bande de fréquences choisie initialement ne soit plus optimale et qu'une autre bande de fréquences, possiblement utilisable par les nœuds du réseau 100, soit devenue plus adaptée et permette de meilleures performances.

-Le document US2012/0134395A1, qui est une demande de brevet, traite d'une méthode de détermination d'une bande fréquentielle à utiliser pour communiquer dans un réseau de communication à courants porteurs en ligne. D'autres exemples d'art antérieur sont divulgués dans les demandes de brevet US2016/127515A1, US2016/127056A1 et WO2016/166238A1, ainsi que dans le brevet US524633A.

La norme G3-PLC ne décrit pas de mécanisme permettant d'envisager une commutation dynamique d'une bande de fréquences vers une autre bande de fréquences. Le réseau de communication maillé 100 peut alors se retrouver dans une situation où les nœuds communiquent via une bande de fréquences non optimale, avec possiblement des performances dégradées, et sans possibilité d'utiliser automatiquement une autre bande de fréquences qui permettrait de bien meilleures performances.

Il est donc nécessaire de proposer un procédé permettant de pallier ces inconvénients.

L'invention concerne un système pour un réseau de communication maillé comprenant une pluralité de dispositifs électroniques connectés à un média partagé et utilisant une première bande de fréquences parmi une pluralité de bande de fréquences pour échanger des messages, chaque dispositif électronique étant adapté pour utiliser chaque bande de fréquences de la pluralité de bandes de fréquences, et un dispositif de contrôle. Le système permet une sélection d'une bande de fréquences dite optimale parmi la pluralité de bandes de fréquences, le dispositif de contrôle est adapté pour :
- émettre à destination de chaque dispositif électronique un premier message comprenant une instruction de réalisation d'un test de qualité de la pluralité de bande de fréquences dans un ordre prédéterminé et une première information de synchronisation pour la réalisation dudit test de qualité,
- collecter, à l'issue du test de qualité, pour chaque dispositif électronique, des données de qualité associées à chaque bande de fréquences,
- déterminer, pour chaque bande de fréquences, un indicateur de qualité associé à la bande de fréquences à partir des données de qualité collectées, et,
- sélectionner une bande de fréquences dite optimale parmi la pluralité de bandes de fréquences, ladite bande de fréquences dite optimale étant la bande de fréquences associée à un indicateur de qualité de valeur maximale,
- lorsque la bande de fréquences dite optimale correspond à une deuxième bande de fréquences différente de la première bande de fréquence, alors :
- émettre à destination de chaque dispositif électronique un deuxième message comprenant une instruction d'utilisation de la deuxième bande de fréquences dite optimale en lieu de la première bande de fréquences.

Chaque dispositif électronique est en outre adapté pour, suite à la réception du premier message :
- déterminer un moment de début du test de qualité en fonction de la première information de synchronisation, et,
- à partir dudit moment de début, utiliser successivement, dans l'ordre prédéterminé, chaque bande de fréquences de la pluralité de bandes de fréquences pendant une durée prédéterminée associée à la bande de fréquences utilisée,
- enregistrer, en association avec chaque bande de fréquences utilisée, des données de qualité associées à des messages reçus par le dispositif électronique pendant chaque durée prédéterminée d'utilisation de la bande de fréquences,
- émettre à destination du dispositif de contrôle un message comprenant les données de qualité associées à chaque bande de fréquences, et,
- lorsqu'un deuxième message est reçu, utiliser la deuxième bande de fréquences dite optimale en lieu de la première bande de fréquences pour émettre et recevoir des messages.

Avantageusement, le système permet la sélection automatique d'une bande de fréquences dite optimale en lieu et place d'une bande de fréquences initialement utilisée par le réseau de communication. Pour cela, les différents dispositifs électroniques, à l'initiative d'un dispositif de contrôle détectant que la qualité de fonctionnement du réseau n'est pas satisfaisante, peuvent basculer de façon synchronisée sur chacune des bandes de fréquences potentiellement utilisables et collecter des données de qualités. Le dispositif de contrôle, après avoir récupéré lesdites données de qualité peut déterminer s'il est opportun de basculer vers une nouvelle bande de fréquences dite bande de fréquences optimale. Dans ce cas, le dispositif de contrôle émet un premier message permettant de lancer une bascule synchronisée de tous les nœuds du réseau vers la bande de fréquences dite optimale.

Selon un mode de réalisation complémentaire de l'invention, un dispositif électronique parmi la pluralité de dispositifs électroniques est en outre adapté pour, lors du test de qualité, et pendant chaque durée prédéterminée d'utilisation d'une bande de fréquences, émettre des messages à destination de l'ensemble des dispositifs électroniques.

Avantageusement, on s'assure ainsi que chaque dispositif électronique reçoive des messages durant le test de qualité pour chaque bande de fréquences. Ainsi, le procédé garantit que chaque dispositif électronique peut enregistrer des données de qualité associées à chaque bande de fréquences.

Selon un mode de réalisation complémentaire de l'invention, le deuxième message comprenant une deuxième information de synchronisation, chaque dispositif électronique est adapté pour, lorsqu'un deuxième message est reçu, utiliser la deuxième bande de fréquences optimale en lieu de la première bande de fréquences pour émettre et recevoir des messages à partir d'un moment déterminé en fonction de la deuxième information de synchronisation.

Avantageusement, la bascule de tous les dispositifs électroniques du réseau est ainsi synchronisée à un même moment défini en fonction de la deuxième information de synchronisation.

Selon un mode de réalisation complémentaire de l'invention, le deuxième message comprenant une troisième information de synchronisation, chaque dispositif électronique est adapté pour, lorsqu'un deuxième message est reçu, utiliser la deuxième bande de fréquences optimale en lieu de la première bande de fréquences pour émettre et recevoir des messages à partir d'un moment déterminé en fonction de la deuxième information de synchronisation puis utiliser de nouveau la première bande de fréquences pour émettre et recevoir des messages à partir d'un moment déterminé en fonction de la troisième information de synchronisation.

Avantageusement, un mécanisme de retour arrière vers la première bande de fréquences est prévu pour chaque dispositif électronique en cas de problème. Le moment du retour arrière est synchronisé entre tous les dispositifs électroniques en fonction de la troisième information de synchronisation.

L'invention concerne également un procédé, pour un réseau de communication maillé comprenant une pluralité de dispositifs électroniques connectés à un média partagé et utilisant une première bande de fréquences parmi une pluralité de bandes de fréquences pour échanger des messages, chaque dispositif électronique étant adapté pour utiliser chaque bande de fréquences de la pluralité de bandes de fréquences, et un dispositif de contrôle, le procédé permettant une sélection d'une bande de fréquences dite optimale parmi la pluralité de bandes de fréquences, le procédé est exécuté par chaque dispositif électronique et comprend les étapes de :
- recevoir en provenance du dispositif de contrôle un premier message comprenant une instruction de réalisation d'un test de qualité de la pluralité de bandes de fréquences dans un ordre prédéterminé et une première information de synchronisation pour la réalisation dudit test de qualité,
- déterminer un moment de début du test de qualité en fonction de la première information de synchronisation, et,
- à partir dudit moment de début, utiliser successivement, dans l'ordre prédéterminé, chaque bande de fréquences de la pluralité de bandes de fréquences pendant une durée prédéterminée associée à la bande de fréquences utilisée,
- enregistrer, en association avec chaque bande de fréquences utilisée, des données de qualité associées à des messages reçus par le dispositif électronique pendant chaque durée prédéterminée d'utilisation de la bande de fréquences,
- émettre à destination du dispositif de contrôle un message comprenant les données de qualité associées à chaque bande de fréquences, et,
- lorsqu'un deuxième message est reçu comprenant une instruction de bascule vers une deuxième bande de fréquences dite optimale, utiliser la deuxième bande de fréquences dite optimale en lieu de la première bande de fréquences pour émettre et recevoir des messages.

Selon un mode de réalisation complémentaire de l'invention, le deuxième message comprenant une deuxième information de synchronisation, l'étape d'utiliser la deuxième bande de fréquences optimale en lieu de la première bande de fréquences pour émettre et recevoir des messages est réalisée à partir d'un moment déterminé en fonction de la deuxième information de synchronisation.

Selon un mode de réalisation complémentaire de l'invention, le deuxième message comprenant une troisième information de synchronisation, le procédé comprend une étape ultérieure d'utiliser de nouveau la première bande de fréquences pour émettre et recevoir des messages à partir d'un moment déterminé en fonction de la troisième information de synchronisation.

Selon un mode de réalisation complémentaire de l'invention, le procédé comprend, ultérieurement à l'étape d'utilisation de la deuxième bande de fréquences dite optimale, les étapes de :
- recevoir un message comprenant un identifiant d'un dispositif électronique du réseau et une indication d'une troisième bande de fréquences parmi la pluralité de bandes de fréquences,
- basculer vers la troisième bande de fréquences,
- envoyer vers le dispositif électronique correspondant à l'identifiant reçu un message comprenant une instruction d'utilisation de la bande de fréquences dite optimale et une instruction d'acquittement,
- à l'expiration d'un délai d'attente prédéfini ou bien à réception de l'acquittement, basculer vers la bande de fréquences dite optimale, puis,
- envoyer un message vers le dispositif de contrôle comprenant une information sur la bonne réception, ou non, de l'acquittement.

Avantageusement, il est ainsi possible de faire basculer un dispositif électronique qui serait resté bloqué sur une troisième bande de fréquences en envoyant une instruction à un dispositif électronique voisin. Le-dit dispositif électronique voisin peut alors basculer vers la troisième bande de fréquences, afin de pouvoir communiquer avec le dispositif électronique bloqué sur la troisième bande de fréquences, et lui envoyer une instruction de bascule vers la bande de fréquences dite optimale, utilisée par tous les autres dispositifs électroniques du réseau. Le dispositif électronique voisin attend une confirmation avant de revenir vers la bande de fréquences dite optimale, et informe le dispositif de contrôle du bon déroulé de l'opération.

L'invention concerne également un procédé, pour un réseau de communication maillé comprenant une pluralité de dispositifs électroniques connectés à un media partagé et utilisant une première bande de fréquences parmi une pluralité de bandes de fréquences pour échanger des messages, chaque dispositif électronique étant adapté pour utiliser chaque bande de fréquences de la pluralité de bandes de fréquences, et un dispositif de contrôle, le procédé permettant une sélection d'une bande de fréquences dite optimale parmi la pluralité de bandes de fréquences, le procédé étant exécuté par le dispositif de contrôle et comprenant les étapes de :
- déterminer une information de qualité de fonctionnement du réseau de communication,
- si l'information de qualité de fonctionnement du réseau de communication est inférieure à un premier seuil, alors :
- émettre à destination de chaque dispositif électronique un premier message comprenant une instruction de réalisation d'un test de qualité de la pluralité de bandes de fréquences dans un ordre prédéterminé et une première information de synchronisation pour la réalisation dudit test de qualité,
- collecter, à l'issue du test de qualité, pour chaque dispositif électronique, des données de qualité associées à chaque bande de fréquences,
- déterminer, pour chaque bande de fréquence, un indicateur de qualité associé à la bande de fréquences à partir des données de qualité collectées, et,
- sélectionner une bande de fréquences dite optimale parmi la pluralité de bandes de fréquences, ladite bande de fréquences dite optimale étant la bande de fréquences associée à un indicateur de qualité de valeur maximale,
- lorsque la bande de fréquences dite optimale correspond à une deuxième bande de fréquences différente de la première bande de fréquences, alors :
- émettre à destination de chaque dispositif électronique un deuxième message comprenant une instruction d'utilisation de la deuxième bande de fréquences dite optimale en lieu de la première bande de fréquences.

Selon un mode de réalisation complémentaire de l'invention, le deuxième message comprenant une deuxième information de synchronisation et une troisième information de synchronisation, la deuxième information de synchronisation permettant de définir un moment de début d'utilisation de la deuxième bande de fréquences par chaque dispositif électronique, la troisième information de synchronisation permettant de définir un moment, pour chaque dispositif électronique de retour à l'utilisation de la première bande de fréquences, le procédé comprend les étapes ultérieures de :
- déterminer, entre le moment de début d'utilisation de la deuxième bande de fréquences et le moment de retour à l'utilisation de la première bande de fréquences, une information de qualité de fonctionnement du réseau de communication, et,
- lorsque ladite information de qualité de fonctionnement du réseau de communication est supérieure à un deuxième seuil, alors :
- émettre à destination de chaque dispositif électronique un troisième message comprenant une instruction d'annulation de réutilisation de la première bande de fréquences au moment défini par la troisième information de synchronisation.

L'invention concerne également un dispositif électronique d'un réseau de communication maillé comprenant une pluralité de dispositifs électroniques connectés à un media partagé et utilisant une première bande de fréquences parmi une pluralité de bande de fréquences pour échanger des messages, le dispositif électronique étant adapté pour :
- recevoir en provenance d'un dispositif de contrôle un premier message comprenant une instruction de réalisation d'un test de qualité de la pluralité de bandes de fréquences dans un ordre prédéterminé et une première information de synchronisation pour la réalisation dudit test de qualité,
- déterminer un moment de début du test de qualité en fonction de la première information de synchronisation, et,
- à partir dudit moment de début, utiliser successivement, dans l'ordre prédéterminé, chaque bande de fréquences de la pluralité de bandes de fréquences pendant une durée prédéterminée associée à la bande de fréquences utilisée,
- enregistrer, en association avec chaque bande de fréquences utilisée, des données de qualité associées à des messages reçus par le dispositif électronique pendant chaque durée prédéterminée d'utilisation de la bande de fréquences,
- émettre à destination du dispositif de contrôle un message comprenant les données de qualité associées à chaque bande de fréquences, et,
- lorsqu'un deuxième message est reçu comprenant une instruction de bascule vers une deuxième bande de fréquences dite optimale, utiliser la deuxième bande de fréquences dite optimale en lieu de la première bande de fréquences pour émettre et recevoir des messages.

Selon un mode de réalisation complémentaire de l'invention, le deuxième message comprenant une deuxième information de synchronisation, le dispositif électronique étant adapté pour utiliser la deuxième bande de fréquences optimale en lieu de la première bande de fréquences pour émettre et recevoir des messages à partir d'un moment déterminé en fonction de la deuxième information de synchronisation.

L'invention concerne également un dispositif de contrôle d'un réseau de communication maillé comprenant une pluralité de dispositifs électroniques connectés à un media partagé et utilisant une première bande de fréquences parmi une pluralité de bandes de fréquences pour échanger des messages, le dispositif de contrôle étant adapté pour :
- déterminer une information de qualité de fonctionnement du réseau de communication maillé,
- si l'information de qualité de fonctionnement du réseau de communication est inférieure à un premier seuil, alors :
- émettre à destination de chaque dispositif électronique un premier message comprenant une instruction de réalisation d'un test de qualité de la pluralité de bandes de fréquences dans un ordre prédéterminé et une première information de synchronisation pour la réalisation dudit test de qualité,
- collecter, à l'issue du test de qualité, pour chaque dispositif électronique, des données de qualité associées à chaque bande de fréquences,
- déterminer, pour chaque bande de fréquences, un indicateur de qualité associé à la bande de fréquences à partir des données de qualité collectées, et,
- sélectionner une bande de fréquences dite optimale parmi la pluralité de bandes de fréquences, ladite bande de fréquences dite optimale étant la bande de fréquences associée à un indicateur de qualité de valeur maximale,
- lorsque la bande de fréquences dite optimale correspond à une deuxième bande de fréquences différente de la première bande de fréquences, alors :
- émettre à destination de chaque dispositif électronique un deuxième message comprenant une instruction d'utilisation de la deuxième bande de fréquences dite optimale en lieu de la première bande de fréquences.

Selon un mode de réalisation complémentaire de l'invention, le deuxième message comprenant une deuxième information de synchronisation et une troisième information de synchronisation, la deuxième information de synchronisation permettant de définir un moment de début d'utilisation de la deuxième bande de fréquences par chaque dispositif électronique, la troisième information de synchronisation permettant de définir un moment, pour chaque dispositif électronique de retour à l'utilisation de la première bande de fréquences, le dispositif de contrôle est en outre adapté pour :
- déterminer, entre le moment de début d'utilisation de la deuxième bande de fréquences et le moment de retour à l'utilisation de la première bande de fréquences, une information de qualité de fonctionnement du réseau de communication, et,
- lorsque ladite information de qualité de fonctionnement du réseau de communication est supérieure à un deuxième seuil, alors :
- émettre à destination de chaque dispositif électronique un troisième message comprenant une instruction d'annulation de réutilisation de la première bande de fréquences au moment défini par la troisième information de synchronisation.

L'invention concerne également un programme d'ordinateur comprenant des instructions pour mettre en œuvre, par un processeur d'un dispositif électronique d'un réseau de communication maillé connecté à un media partagé et utilisant une première bande de fréquences parmi une pluralité de bande de fréquences pour échanger des messages, le dispositif électronique étant adapté pour utiliser chaque bande de fréquences de la pluralité de bandes de fréquences, un procédé permettant une sélection d'une bande de fréquences dite optimale parmi la pluralité de bandes de fréquences, lorsque le programme d'ordinateur est exécuté par le processeur.

L'invention concerne également un programme d'ordinateur comprenant des instructions pour mettre en œuvre, par un processeur d'un dispositif de contrôle d'un réseau de communication maillé comprenant une pluralité de dispositifs électroniques connectés à un media partagé et utilisant une première bande de fréquences parmi une pluralité de bande de fréquences pour échanger des messages, chaque dispositif électronique étant adapté pour utiliser chaque bande de fréquences de la pluralité de bandes de fréquences, un procédé permettant une sélection d'une bande de fréquences dite optimale parmi la pluralité de bandes de fréquences, lorsque le programme d'ordinateur est exécuté par le processeur.

L'invention concerne également un support d'enregistrement sur lequel est stocké l'un ou l'autre des précédents programmes d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la **Fig. 1** illustre schématiquement un réseau de communication maillé comprenant une pluralité de dispositifs électroniques connectés et un dispositif de contrôle, par exemple conforme à la norme G3-PLC,
- la **Fig. 2** illustre schématiquement un procédé de sélection d'une bande de fréquences dite optimale parmi une pluralité de bandes de fréquences pour un réseau de communication maillé selon un mode de réalisation de l'invention,
- la **Fig. 3** illustre schématiquement l'architecture matérielle d'un dispositif électronique d'un réseau de communication maillé, le dispositif électronique étant adapté pour sélectionner une bande de fréquences dite optimale parmi une pluralité de bandes de fréquences, selon un mode de réalisation de l'invention,
- la **Fig. 4** illustre schématiquement l'architecture matérielle d'un dispositif de contrôle d'un réseau de communication maillé, le dispositif de contrôle étant adapté pour sélectionner une bande de fréquences dite optimale parmi une pluralité de bandes de fréquences, selon un mode de réalisation de l'invention.

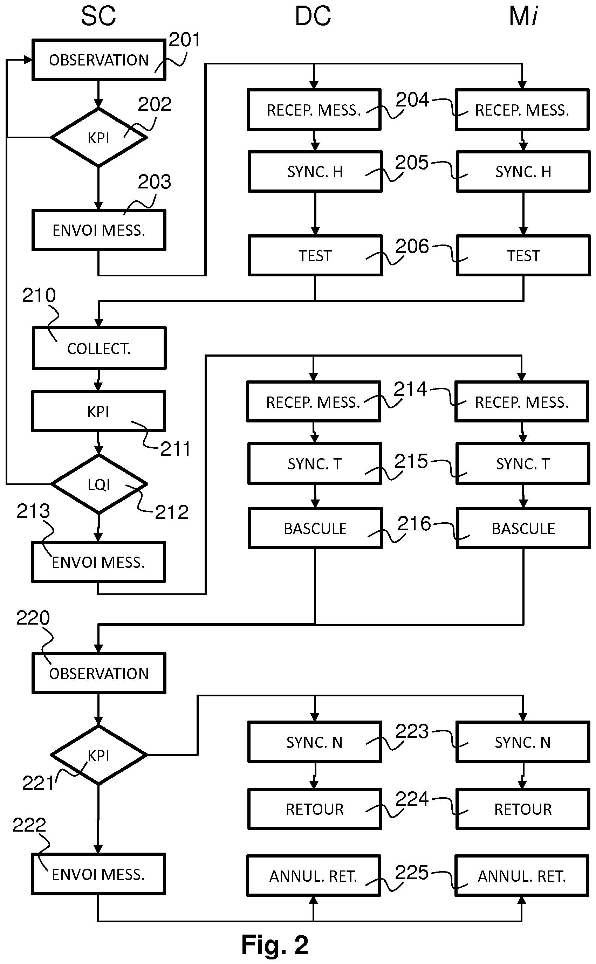

La **Fig. 2** illustre schématiquement un procédé de sélection d'une bande de fréquences dite optimale parmi une pluralité de bandes de fréquences pour un réseau de communication maillé 100 (ci-après « réseau 100 ») selon un mode de réalisation de l'invention. Les étapes du procédé sont réalisées par les nœuds DC, M1, M2, M3, ... M15 du réseau de communications maillé 100 ainsi que par un dispositif de contrôle SC. Le dispositif de contrôle SC est typiquement un dispositif électronique tel un serveur informatique hébergé dans un système d'information de l'opérateur opérant le réseau 100. Selon un mode de réalisation alternatif de l'invention, les fonctionnalités du dispositif de contrôle SC sont intégrées dans l'un des nœuds du réseau de communication maillé 100, par exemple dans le concentrateur de données DC.

Le procédé décrit ci-après s'applique à un système comprenant différents nœuds d'un réseau 100 et un dispositif de contrôle SC. Une différence est faite entre les nœuds, en distinguant d'un côté les compteurs communicants M1, M2, M3 ... M15 et de l'autre le nœud concentrateur de données DC. Cette différence ne porte que sur la nature des messages, protocoles ou instructions devant être utilisés pour interagir avec ledit nœud, le principe de fonctionnement restant similaire.

Dans un premier temps, non illustré, le réseau 100 est déployé, tous les nœuds DC, M1, M2, M3, ... M15 utilisant une même bande de fréquences prédéfinie pour communiquer. Le choix de cette bande de fréquences relève d'une décision de l'opérateur du réseau de communication maillé 100, et de la compatibilité des nœuds avec cette bande de fréquences. Il est considéré pour la suite de la description que chaque nœud DC, M1, M2, M3, ... M15, c'est-à-dire le concentrateur de données DC et tous les compteurs communicants M1, M2, M3, ... M15, sont tous compatibles avec une même pluralité de bandes de fréquences. Dit autrement, chaque nœud peut possiblement utiliser l'une ou l'autre des bandes de fréquences de la pluralité de bandes de fréquences pour communiquer, c'est-à-dire recevoir ou envoyer des messages à destination d'un ou plusieurs nœuds. Toutefois, seule une unique bande de fréquences, parmi la pluralité de bandes de fréquences, est utilisable à un moment donné. Ainsi, un nœud DC, M1, M2, M3, ... M15 doit basculer d'une bande de fréquences vers une autre bande de fréquences pour pouvoir utiliser cette dernière bande de fréquences.

Dans une première étape 201, le dispositif de contrôle SC détermine une information de qualité de fonctionnement du réseau 100. Cette information de qualité peut être un indicateur de performance d'une application de collecte de données sur les différents nœuds M1, M2, M3, ... M15 du réseau. L'information de qualité peut être ainsi un taux de collecte, représentant le pourcentage des nœuds pour lesquels une collecte de données, par exemple des données de mesure d'une consommation électrique pour des nœuds de type compteur électrique communicant, a bien fonctionné. L'information de qualité peut être un temps de collecte, le temps de collecte représentant par exemple un temps nécessaire pour collecter des données sur l'ensemble, ou un nombre prédéterminé, des nœuds M1, M2, M3, ... M15. L'information de qualité peut être déterminée sur une période prédéfinie, par exemple vingt-quatre heures, en faisant typiquement une moyenne des indicateurs de performance sur la période. Ladite période peut être une période glissante.

A l'issue de cette période, dans une étape 202, le dispositif de contrôle SC détermine si l'information de qualité de fonctionnement du réseau 100 est inférieure à un premier seuil prédéterminé. Si l'information de qualité de fonctionnement du réseau 100 est supérieure au premier seuil prédéterminé, cela signifie que la qualité de fonctionnement du réseau 100 est satisfaisante, le choix fait pour la bande de fréquences utilisée pour les communications des nœuds sur le réseau 100 est donc adéquat. Le dispositif de contrôle SC retourne donc à l'étape 201 d'observation de la qualité de fonctionnement du réseau 100. Au contraire, si l'information de qualité de fonctionnement du réseau 100 est inférieure au premier seuil prédéterminé, cela signifie que la qualité de fonctionnement du réseau 100 n'est pas satisfaisante. Cela peut signifier que le choix initial fait pour la bande de fréquences utilisée pour les communications des nœuds sur le réseau 100 n'est pas un choix optimal, une autre bande de fréquences pouvant potentiellement être plus adéquate. Dans ce cas, une procédure de test va être lancée sur les nœuds du réseau 100 comme décrit ci-après, le dispositif de contrôle SC passant à l'étape 203 du procédé.

Dans l'étape 203, le dispositif de contrôle SC émet à destination de chaque nœud DC, M1, M2, M3, ... M15 un premier message comprenant une instruction de réalisation d'un test de qualité de la pluralité de bandes de fréquences dans un ordre prédéterminé et une première information de synchronisation H pour la réalisation dudit test de qualité. Selon un mode de réalisation de l'invention, le premier message est émis directement par le dispositif de contrôle SC à destination de chaque nœud du réseau 100. Selon un autre mode de réalisation de l'invention, le dispositif de contrôle SC émet le premier message à destination du concentrateur de données DC, lequel relaie le premier message à destination des autres nœuds M1, M2, M3, ... M15 du réseau 100. Le premier message devant être envoyé à chaque nœud du réseau 100 peut être envoyé en mode dit « diffusion » (« *broadcast* » en anglais). Alternativement, et afin de pouvoir mieux s'assurer que chaque message est bien reçu, le premier message peut être émis en mode dit « direct » (« *unicast* » en anglais). L'instruction de réalisation du test de qualité peut prendre la forme d'une commande de type DLMS/COSEM (« *Device Language Message Spécification* » et « *Companion Specification for Energy Metering* » en anglais), avec pour attribut COSEM :
- *« LineQualityTestScheduler.execution_time* » pour un message à destination d'un nœud du réseau 100 de type compteur communicant, et,
- *« LineQualilyTest (execution_time)* » pour un message à destination du concentrateur de données DC.
*« execution time* » étant ici la première information de synchronisation H. Cette information de synchronisation H peut être donnée sous la forme d'un horodatage, c'est-à-dire un horaire, ou bien un délai de réalisation.

Comme expliqué ci-après, cette instruction de réalisation d'un test de qualité permet à tous les nœuds de réaliser ledit test de qualité de façon synchronisée. En particulier, un ordre de test de la pluralité des bandes de fréquences doit être préalablement défini, ainsi qu'une durée de chaque test de chaque bande de fréquences. Ces informations (ordre de test et durée de chaque test) peuvent être préalablement configurées dans chaque nœud du réseau 100. Alternativement, le premier message peut comprendre une information permettant à chaque nœud recevant ledit message de connaître l'ordre de réalisation des tests de chaque bande de fréquences. Ladite information peut être une liste ordonnée des bandes de fréquences à tester, ou bien par exemple une référence à une liste prédéfinie connue de chaque nœud. De façon similaire, une information peut correspondre à la durée de test de chaque bande de fréquences.

Dans une étape 204, chaque nœud du réseau 100 reçoit, en provenance du dispositif de contrôle SC, le premier message comprenant l'instruction de réalisation d'un test de qualité de la pluralité de bandes de fréquences dans un ordre prédéterminé et la première information de synchronisation pour la réalisation dudit test de qualité. Ledit premier message a éventuellement transité via le concentrateur de données DC ou d'autres nœuds du réseau 100, comme classiquement dans un réseau de communication maillé. Le premier message à destination du concentrateur de données DC peut être différent du premier message à destination d'un compteur communicant, la norme de communication et les instructions pouvant différer selon le type de dispositif électronique destinataire. Possiblement, chaque nœud du réseau 100 envoie en retour au dispositif de contrôle SC un message d'acquittement au premier message.

Dans une étape suivante 205, chaque nœud du réseau 100 détermine un moment de début du test de qualité en fonction de la première information de synchronisation H. Il est à noter que, classiquement, dans un réseau de communication maillé, particulièrement dans un réseau conforme à la norme G3-PLC, tous les nœuds du réseau sont synchronisés en temps, avec une précision de l'ordre de quelques secondes. Selon un mode de réalisation de l'invention, la première information de synchronisation H correspond à une heure de moment de début du test de qualité située environ vingt-quatre heures après le moment d'émission du premier message. Le procédé est alors en pause jusqu'au moment de début du test de qualité.

Au moment de début, défini par la première information de synchronisation H, dans une étape 206, chaque nœud DC, M1, M2, M3, ... M15 du réseau 100 réalise le test de qualité de la pluralité de bandes de fréquences. Possiblement, le dispositif de contrôle SC, le concentrateur de données DC et/ou chaque nœud du réseau 100 arrêtent préalablement toutes communications, autres que celles nécessaires pour le présent procédé, pendant la durée du test de qualité. La durée du test dépend du nombre de bandes de fréquences à tester, chaque bande de fréquences pouvant être testée pendant une durée typique d'une minute. La réalisation du test de qualité comprend, pour chaque nœud DC, M1, M2, M3, ... M15 du réseau 100 les étapes :
- d'utiliser successivement, dans l'ordre prédéterminé, chaque bande de fréquences de la pluralité de bandes de fréquences pendant une durée prédéterminée associée à la bande de fréquences utilisée, et,
- d'enregistrer, en association avec chaque bande de fréquences utilisée, des données de qualité associées à des messages reçus par le dispositif électronique pendant chaque durée prédéterminée d'utilisation de la bande de fréquences.

Ainsi, lorsque le test débute, chaque nœud du réseau 100 bascule vers une première bande de fréquences, ladite bande de fréquences étant définie selon l'ordre prédéfini. Par basculer vers une bande de fréquences, on entend que le nœud se met à utiliser ladite bande de fréquences à la place de la bande de fréquences utilisée lors des étapes précédentes. Chaque bande de fréquences de la pluralité de bandes de fréquences est ainsi successivement utilisée pour être testée. Dans le cas d'un réseau 100 conforme à la norme G3-PLC, chaque bascule vers une nouvelle bande de fréquences d'un nœud est réalisée sans réaliser d'étape dite de « *Bootstrap G3* ». Ainsi, chaque nœud reste abonné au réseau G3-PLC et au concentrateur de données DC, les tables de routage de chaque nœud étant conservées. La durée ou période de test de chaque bande de fréquences peut être identique ou peut être différente selon la bande de fréquences à tester. Par défaut, chaque période de test d'une bande de fréquences est prédéfinie et a une valeur identique. Durant chaque période de test d'une bande de fréquences, chaque nœud enregistre, dans une table, par exemple la table dite « POS » (« *Personal Operating Space* » en anglais) définie par la norme G3-PLC publiée en mars 2017, les données de qualité associées à des messages reçus par le dispositif électronique pendant chaque durée prédéterminée d'utilisation de la bande de fréquences. Les données de qualités peuvent correspondre au forward LQI (« *forward Link Quality Indicator* » en anglais, défini par exemple dans la norme G3-PLC, chapitre 7.17.1.3 de la version publiée en avril 2015 ou mars 2017). Dans le cas d'un nœud conforme à la seule norme G3-PLC publiée en avril 2015, ledit nœud enregistre les données de qualité dans une table spécifique non prévue par la norme.

Selon un mode de réalisation de l'invention, et afin de garantir que chaque nœud reçoit des messages afin de disposer de données de qualité, au moins un nœud prédéfini du réseau 100, par exemple le concentrateur de données DC, émet au moins un message, préférentiellement de type « broadcast » lors de chaque période de test d'une bande de fréquences. Ce message est émis préférentiellement à destination de l'ensemble des nœuds du réseau 100. Selon un mode de réalisation complémentaire de l'invention, chaque nœud émet au moins un message lors de chaque période de test, possiblement de type broadcast et à un moment prédéfini de chaque période de test afin de réduire les risques de collisions.

Ainsi, lors d'une durée ou période de test d'une bande de fréquences, chaque nœud collecte des données de qualité, par exemple des LQI, associées à la bande de fréquences testée. A la fin de chaque période de test, ces données sont enregistrées et conservées en association avec la bande de fréquences testée. Ainsi, à l'issue du test de qualité, chaque nœud a collecté et enregistré des données de qualité en association avec chaque bande de fréquences de la pluralité de bandes de fréquences testées. Si les données de qualité sont enregistrées dans une table POS, chaque nœud effectue une copie de sa table POS, du moins des données de qualités contenues dans ladite table POS, avant de passer au test de la bande de fréquences suivante. Ainsi, des données de qualités sont conservées, par chaque nœud, pour chaque bande de fréquences testée.

Selon un mode de réalisation, à l'issue du test de qualité, chaque nœud rebascule dans la bande de fréquences initialement utilisée avant le début du test de qualité. Selon un mode de réalisation alternatif, chaque nœud bascule à l'issue du test de qualité dans une bande de fréquences prédéfinie, commune à tous les nœuds.

A l'issue du test de qualité, le dispositif de contrôle SC, le concentrateur de données DC et/ou chaque nœud du réseau 100 relancent toutes les communications préalablement arrêtées.

Dans une étape suivante 210, le dispositif de contrôle SC collecte, pour chaque nœud DC, M1, M2, M3, ... M15 du réseau 100, les données de qualité associées à chaque bande de fréquences testée. Selon un mode de réalisation de l'invention, la collecte est effectuée sur initiative du dispositif de contrôle SC, celui-ci envoyant un message, préférentiellement de type « unicast », vers chaque nœud et recevant en retour un message comprenant les données de qualité. Selon un mode de réalisation alternatif de l'invention, chaque nœud, à l'issue de l'étape 206 de test de qualité, et possiblement après un temps d'attente aléatoire, émet à destination du dispositif de contrôle SC un message comprenant les données de qualité associées à chaque bande de fréquences.

Selon un mode de réalisation de l'invention, chaque nœud DC, M1, M2, M3, ... M15 peut émettre un message à destination du dispositif de contrôle, le message étant conforme aux spécifications DLMS/COSEM et tel que l'attribut COSEM soit égal à :
- « *LineQualityTestResult.buffer* », lequel prend la forme d'une matrice comprenant, pour chaque bande de fréquences testée, un extrait de la table POS (ou une table contenant des informations équivalentes) comprenant des identifiants de nœuds voisins du nœud émetteur et, pour chaque voisin, au moins un LQI associé.

Dans une étape suivante 211, le dispositif de contrôle SC détermine pour chaque bande de fréquences, un indicateur de qualité associé à ladite bande de fréquences à partir des données de qualité collectées. En effet, suite à l'étape 210 de collecte des données de qualité, le dispositif de contrôle SC dispose, pour chaque bande de fréquences, de données de qualité associées issues de chaque nœud.

Selon un mode de réalisation de l'invention, le dispositif de contrôle SC détermine pour chaque liaison unidirectionnelle (une liaison unidirectionnelle étant définie par un nœud émetteur et un nœud récepteur, lequel est un nœud voisin du nœud émetteur, chaque sens « émetteur vers récepteur » et « récepteur vers émetteur » définissant une liaison unidirectionnelle différente) et pour chaque bande de fréquences de la pluralité de bandes de fréquences testées un indicateur de qualité, par exemple un LQI. Ledit LQI peut être égal au LQI collecté, ou être une moyenne - ou un minima, un maxima selon le mode de réalisation - si plusieurs valeurs de LQI sont disponibles pour une liaison donnée. Il est alors possible que des données de qualités ne soient pas disponibles pour certaines liaisons avec certaines bandes de fréquences. C'est le cas par exemple si, pour une bande de fréquences testée, c'est-à-dire utilisée, la communication n'est pas possible entre deux nœuds. Selon une première variation du présent mode de réalisation, le dispositif de contrôle SC ne tient pas compte des liaisons pour lesquelles des données de qualité - un LQI par exemple - ne sont pas associées pour chacune des bandes de fréquences de la pluralité de bandes de fréquences. Dit autrement, les liaisons pour lesquelles des données de qualités sont absentes en association avec au moins une bande de fréquences sont ignorées. Le dispositif de contrôle SC détermine alors, pour chaque bande de fréquences, un indicateur de qualité étant égal au pourcentage de liaisons pour lesquelles les données de qualité, par exemple le LQI, sont supérieures à un seuil prédéfini. Ainsi, par exemple, l'indicateur de qualité associé à chaque bande de fréquences est défini comme étant égal au pourcentage de liaisons pour lesquelles le LQI est supérieur à une valeur de LQI prédéfinie. Selon une deuxième variation du présent mode de réalisation de l'invention, le dispositif de contrôle SC tient en compte toutes les liaisons, indifféremment du fait que des données de qualités soient associées à ces liaisons pour chacune des bandes de fréquences ou non. Le dispositif de contrôle SC détermine alors, pour chaque bande de fréquences, un indicateur de qualité étant égal au pourcentage de liaisons pour lesquelles les données de qualité, par exemple le LQI, sont supérieures à un seuil prédéfini, le nombre de liaisons pouvant alors varier suivant la bande de fréquences prise en compte. Selon une alternative à la deuxième variation du présent mode de réalisation de l'invention, le dispositif de contrôle SC détermine un indicateur de qualité en déterminant, pour chaque bande de fréquences, non pas un pourcentage mais un nombre de liaisons pour lesquelles les données de qualité, par exemple le LQI, sont supérieures à un seuil prédéfini.

Il est possible de déterminer un indicateur de qualité pour chaque bande de fréquences suivant un procédé différent à partir des données de qualité collectées.

*In fine,* à l'issue de l'étape 211, un indicateur de qualité est associé à chaque bande de fréquences de la pluralité de bande de fréquences. Par convention, on considérera que les valeurs hautes de l'indicateur de qualité correspondent à une meilleure qualité (de façon cohérente avec le fait qu'une valeur plus haute du LQI correspond à une liaison de meilleure qualité).

Dans l'étape suivante 212, le dispositif de contrôle SC sélectionne une bande de fréquences, dite bande de fréquences optimale, parmi la pluralité de bandes de fréquences, ladite bande de fréquences dite optimale étant la bande de fréquences associée à un indicateur de qualité de valeur maximale. Dit autrement, le dispositif de contrôle SC sélectionne, parmi la pluralité de bandes de fréquences, la bande de fréquences associée à la plus haute valeur de l'indicateur de qualité. Ladite bande de fréquences est dite bande de fréquences optimale car elle correspond à la bande de fréquences permettant de maximiser la qualité globale des liaisons entre les nœuds.

Lorsque la bande de fréquences dite « optimale » correspond à la bande de fréquences initialement utilisée, c'est à dire à la bande de fréquences utilisée par les nœuds du réseau 100 lors des étapes 201 à 205, puis possiblement 210 à 212, du procédé, il n'est pas opportun de basculer les nœuds du réseau 100 vers une autre bande de fréquences. En effet, la bande de fréquences utilisée est la bande de fréquences optimale. Dans ce cas, le procédé de sélection d'une bande de fréquences optimale recommence à l'étape 201, possiblement après un délai d'attente prédéfini.

Dans le cas contraire, lorsque la bande de fréquences dite optimale correspond à une deuxième bande de fréquences différente de la première bande de fréquences initialement utilisée par les nœuds du réseau 100 lors des étapes 201 à 205, puis possiblement 210 à 212, du procédé, il est opportun de basculer les nœuds du réseau 100 vers cette deuxième bande de fréquences dite optimale. Le dispositif de contrôle SC passe alors à l'étape 213.

Dans l'étape 213, le dispositif de contrôle SC émet à destination de chaque nœud du réseau 100 un deuxième message comprenant une instruction d'utilisation de la deuxième bande de fréquences dite optimale en lieu de la première bande de fréquences initialement utilisée.

Selon un mode de réalisation de l'invention, le deuxième message comprend une deuxième information de synchronisation T. Selon un mode de réalisation complémentaire de l'invention, le deuxième message comprend, outre la deuxième information de synchronisation T, une troisième information de synchronisation N.

Ainsi, le dispositif de contrôle SC envoie à chaque nœud DC, M1, M2, M3, ... M15 du réseau 100 un message comprenant une instruction de bascule vers la bande de fréquences dite optimale. Ce message est préférentiellement envoyé en mode « unicast » afin de pouvoir s'assurer de sa bonne réception. Le deuxième message comprend possiblement une deuxième information de synchronisation T permettant de synchroniser la bascule des nœuds vers la bande de fréquences dite optimale à un même moment. Le deuxième message comprend possiblement une troisième information de synchronisation N permettant de définir un délai de retour-arrière, pour chaque nœud, à la première bande de fréquences initialement utilisée en cas de problème (« *fallback solution* » en anglais).

Les commandes DLMS/COSEM correspondant aux instructions envoyées sont :
- pour un nœud M1, M2, M3, ... M15 de type compteur communicant :
   ∘ *PlcG3MacBandSelectionScheduler.execution_time* (deuxième information de synchronisation), et,
   ∘ *PlcG3MacBandSelectionTimeout.value* (troisième information de synchronisation),
- pour un nœud DC de type concentrateur de données :
   ∘ *PLC G3 Band Plan selection* (bande de fréquences dite optimale).

Dans une étape 214, chaque nœud DC, M1, M2, M3, ... M15 du réseau 100 reçoit le deuxième message. Selon un mode de réalisation de l'invention, en l'absence de deuxième information de synchronisation T, chaque nœud peut basculer vers la bande de fréquences dite optimale à réception du deuxième message.

Dans l'hypothèse où le deuxième message comprend la deuxième information de synchronisation T, chaque nœud DC, M1, M2, M3, ... M15 du réseau 100 détermine un moment de bascule en fonction de la deuxième information de synchronisation T. La deuxième information de synchronisation T peut correspondre à un moment prédéfini ou à un délai. Chaque nœud attend ensuite ledit moment pour réaliser la bascule vers la bande de fréquences dite optimale, ce qui permet une bascule globale des nœuds du réseau 100 à un même moment, dit moment de bascule. La coupure des communications entre les nœuds est donc limitée dans le temps.

Dans une étape 216, au moment de bascule défini lors de l'étape 215 en fonction de la deuxième information de synchronisation T, tous les nœuds du réseau 100 basculent vers la deuxième bande de fréquences dite optimale. Dit autrement, chaque nœud utilise à compter de ce moment la deuxième bande de fréquences dite optimale pour émettre et recevoir des messages.

Si une troisième information de synchronisation N est comprise dans le deuxième message, ou si chaque nœud comprend de manière prédéfinie une information similaire à la troisième information de synchronisation N permettant de définir un délai de retour-arrière, alors chaque nœud du réseau fonctionne de façon normale en utilisant la deuxième bande de fréquences dite optimale jusqu'au moment de retour-arrière défini en fonction de la troisième information de synchronisation N ou bien prédéfini. A ce moment-là de retour-arrière, et en l'absence d'instruction contraire reçue entre-temps, chaque nœud re-bascule automatiquement vers la première bande de fréquences utilisée initialement. Ce mécanisme de protection garantit un retour à une situation normale dans le cas où une deuxième bande de fréquences inadaptée aurait été sélectionnée lors des étapes 212 et 213.

Dans une étape 220, le dispositif de contrôle SC détermine, entre le moment de bascule, c'est-à-dire le moment de début d'utilisation de la deuxième bande de fréquences et le moment de retour-arrière à l'utilisation de la première bande de fréquences défini en fonction de la troisième information de synchronisation N, une information de qualité de fonctionnement du réseau de communication. Dit autrement, de façon similaire à l'étape 201, et une fois la bascule de tous les nœuds réalisée, le dispositif de contrôle détermine une information de qualité de fonctionnement du réseau 100. Cette information de qualité doit être déterminée avant un éventuel retour-arrière de tous les nœuds du réseau 100, c'est-à-dire avant le moment déterminé en fonction de la troisième information de synchronisation N, et ceci afin de permettre l'envoi d'une instruction d'annulation du retour arrière dans les temps.

Dans une étape 221, si l'information de qualité est supérieure à un deuxième seuil, alors le choix de la bande de fréquences dite optimale a bien été opportun, et il est possible d'annuler le retour arrière des nœuds du réseau 100 vers la première bande de fréquences initialement utilisée. Le dispositif de contrôle SC passe alors à une étape 222 d'envoi du message d'annulation du retour-arrière.

L'information de qualité de fonctionnement du réseau 100 peut être déterminée de façon continue sur une fenêtre glissante de temps, le test réalisé lors de l'étape 221 étant alors réalisé en continu. Le message d'annulation du retour-arrière est envoyé, dans une étape 222, dès que l'information de qualité est supérieure au deuxième seuil.

L'étape 222 correspond à l'envoi, par le dispositif de contrôle SC, d'un message comprenant une instruction d'annulation du retour-arrière à chaque nœud du réseau 100. L'instruction d'annulation peut consister en une remise à zéro du moment de retour-arrière défini lors de l'étape 223.

La valeur du deuxième seuil peut être prédéfinie, par exemple en prenant une valeur identique au premier seuil utilisé lors de l'étape 202. Préférentiellement, la valeur du deuxième seuil est choisie comme étant au moins égale à la valeur de l'information de qualité de fonctionnement déterminée lors de l'étape 201, c'est-à-dire lorsque le réseau 100 utilisait la première bande de fréquences. Ainsi, la deuxième bande de fréquences dite optimale n'est conservée que si l'indicateur de fonctionnement déterminé lors de l'étape 220 indique une amélioration des performances globales du réseau 100 par rapport à un fonctionnement du réseau 100 en utilisant la première bande de fréquences utilisée initialement.

Dans l'étape 221, si à aucun moment l'information de qualité déterminée lors de l'étape 220 n'est supérieure au deuxième seuil, alors l'étape 222 d'envoi du message d'annulation du retour-arrière n'est pas réalisée par le dispositif de contrôle SC.

Dans ce cas, chaque nœud du réseau 100 ayant préalablement déterminé dans une étape 223 un moment de retour-arrière en fonction de la troisième information de synchronisation N, et dans une étape 224 à compter du moment de retour arrière, chaque nœud DC, M1, M2, M3, ... M15 du réseau 100 utilise de nouveau la première bande de fréquences initialement utilisée pour émettre et recevoir des messages à la place de la bande de fréquences dite optimale. Dit autrement, à compter du moment de retour arrière, chaque nœud re-bascule vers la bande de fréquences initialement utilisée.

Il est possible que lors de l'étape 213 d'envoi des messages de bascule vers la bande de fréquences dite optimale, le dispositif de contrôle identifie un nœud du réseau 100 qui ne répond pas à l'instruction de bascule. Dans ce cas, lors de la bascule vers la deuxième bande de fréquences dite optimale, ledit nœud reste à utiliser la première bande de fréquences initialement utilisée. Ce nœud, dit nœud fautif, est donc à partir du moment de la bascule, et en faisant l'hypothèse que la bascule n'est pas ensuite annulée, totalement coupé du reste des nœuds du réseau 100. Le dispositif de contrôle SC peut alors mettre en œuvre un procédé pour reconnecter le nœud dit fautif aux autres nœuds du réseau 100.

Dans une première étape, concomitante à l'étape 213, le dispositif de contrôle identifie un nœud, dit nœud fautif, ledit nœud n'ayant par exemple pas acquitté l'instruction de bascule envoyée dans l'étape 213. Possiblement, le message d'instruction étant émis de fait par le concentrateur de données DC, c'est le concentrateur de données DC qui identifie le nœud fautif et envoie l'information au dispositif de contrôle SC.

Le dispositif de contrôle SC détermine ensuite, via des informations préalablement collectées sur la topologie du réseau 100 (par exemple des résultats de commandes de type « *path discovery* » - en anglais - préalablement envoyées) un nœud voisin du nœud fautif. Le choix d'un nœud voisin permet de garantir une communication directe entre les deux nœuds.

Le dispositif de contrôle SC envoie alors, via le concentrateur de données DC, un message audit nœud voisin, ledit message comprenant un identifiant du nœud dit fautif du réseau et une indication d'une troisième bande de fréquences parmi la pluralité de bande de fréquences, possiblement la bande de fréquences utilisée initialement. Suite à la réception de ce message, le nœud voisin réalise les étapes suivantes :
- basculer vers la troisième bande de fréquences, c'est-à-dire la bande de fréquences utilisée initialement et sur laquelle est possiblement resté configuré le nœud fautif,
- envoyer vers le nœud dit fautif, correspondant à l'identifiant reçu, un message comprenant une instruction d'utilisation de la bande de fréquences dite optimale et une instruction d'acquittement,
- à l'expiration d'un délai d'attente prédéfini ou bien à réception de l'acquittement, re-basculer vers la bande de fréquences dite optimale, puis,
- envoyer un message vers le dispositif de contrôle SC comprenant une information sur la bonne réception, ou non, de l'acquittement.

Ce procédé peut être répété autant de fois que nécessaire jusqu'à ce que le nœud fautif acquitte la bonne réception de la commande de bascule vers la bande de fréquences dite optimale. Le procédé est ainsi utilisable pour basculer tout nœud du réseau 100 utilisant, à tort, une bande de fréquences différente de celle utilisée par les autres nœuds, la troisième bande de fréquences étant alors choisie en conséquence égale à la bande de fréquences utilisée à tort.

La commande DLMS/COSEM correspondant à l'instruction envoyée au nœud voisin est par exemple :
*« FrequencyBandAdjustment* », avec comme arguments la bande de fréquences dite optimale à utiliser par le nœud fautif et un identifiant du nœud fautif. En retour, le dispositif de contrôle reçoit un message comprenant une information sur le succès ou non de l'opération.

Il est à noter que, dans un mode de réalisation alternatif, tout ou partie des étapes réalisées dans le présent procédé par le dispositif de contrôle SC peut être réalisée par le concentrateur de données DC.

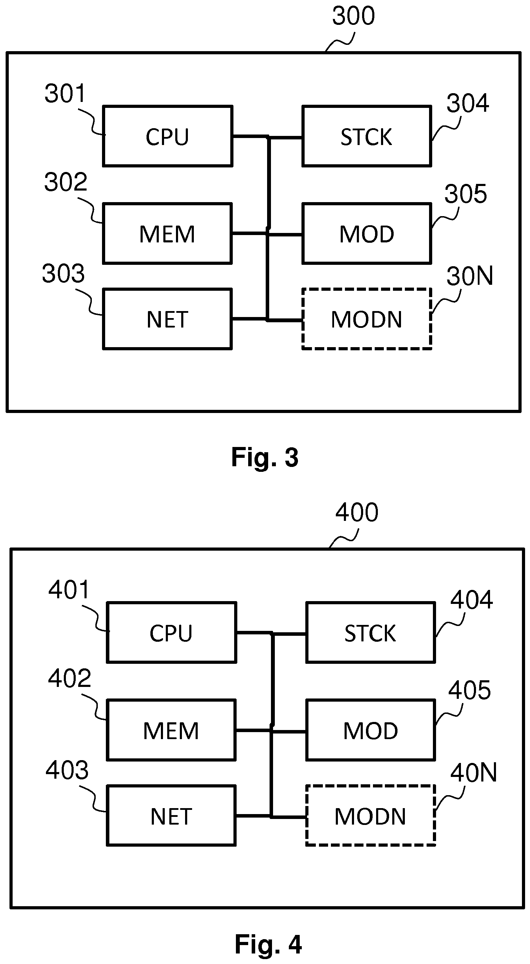

La **Fig. 3** illustre schématiquement l'architecture matérielle d'un nœud ou dispositif électronique 300 d'un réseau 100 de communication maillé, le dispositif électronique 300 étant adapté pour sélectionner une bande de fréquences dite optimale parmi une pluralité de bandes de fréquences, selon un mode de réalisation de l'invention. Le dispositif électronique 300 correspond à un nœud du réseau 100, plus particulièrement au concentrateur de données DC ou à un des compteurs communicants M1, M2, M3 ... M15 de la Fig. 1. Le dispositif électronique 300 est adapté pour pouvoir utiliser chaque bande de fréquences de la pluralité de bandes de fréquences. Le dispositif électronique 300 est adapté pour :
- recevoir en provenance d'un dispositif de contrôle SC un premier message comprenant une instruction de réalisation d'un test de qualité de la pluralité de bandes de fréquences dans un ordre prédéterminé et une première information de synchronisation H pour la réalisation dudit test de qualité,
- déterminer un moment de début du test de qualité en fonction de la première information de synchronisation H, et,
- à partir dudit moment de début, utiliser successivement, dans l'ordre prédéterminé, chaque bande de fréquences de la pluralité de bandes de fréquences pendant une durée prédéterminée associée à la bande de fréquences utilisée,
- enregistrer, en association avec chaque bande de fréquences utilisée, des données de qualité associées à des messages reçus par le dispositif électronique pendant chaque durée prédéterminée d'utilisation de la bande de fréquences,
- émettre à destination du dispositif de contrôle SC un message comprenant les données de qualité associées à chaque bande de fréquences, et,
- lorsqu'un deuxième message est reçu comprenant une instruction de bascule vers une deuxième bande de fréquences dite optimale, utiliser la deuxième bande de fréquences dite optimale en lieu de la première bande de fréquences pour émettre et recevoir des messages.

Le dispositif électronique 300 comporte, reliés par un bus de communication : un processeur ou CPU (« *Central Processing Unit* » en anglais) 301 ; une mémoire MEM 302 de type RAM (« *Random Access Memory* » en anglais) et/ou ROM (« *Read Only Memory* » en anglais), un module réseau NET 303, un module de stockage STCK 304 de type stockage interne et possiblement d'autres modules 305 à 30N de différentes natures. Le module de stockage STCK 304 peut être de type disque dur HDD (« *Hard Disk Drive* » en anglais) ou SSD (« *Solid-State Drive* » en anglais), ou de type lecteur de support de stockage externe, tel un lecteur de cartes SD (« *Secure Digital* » en anglais). Le processeur CPU 301 peut enregistrer des données, ou informations, dans la mémoire MEM 302 ou dans le module de stockage STCK 304. Le processeur CPU 301 peut lire des données enregistrées dans la mémoire MEM 302 ou dans le module de stockage STCK 304. Ces données peuvent correspondre à des paramètres de configuration, des instructions, des paramètres de qualité liés à des messages reçus ou à des informations ou instructions reçues par exemple dans un message reçu via le module réseau NET 303 (ou bien via un module de communication 30N permettant une connexion au réseau 110 dans le cas du concentrateur de données DC). Le module réseau NET 303 permet la connexion du dispositif électronique 300 au réseau 100 de communication maillé via un média partagé, par exemple un réseau électrique. Le module réseau NET 303 peut permettre la connexion du dispositif électronique 300 à un dispositif électronique tel qu'un Concentrateur de données DC, par exemple via une technologie de type CPL (Courants Porteurs en Ligne). Le module réseau NET 303 permet au dispositif électronique 300 d'envoyer, respectivement de recevoir, des messages à destination de, respectivement en provenance de, un ou plusieurs dispositifs électroniques voisins, lesdits dispositifs électroniques étant connectés au même réseau 100 de communication maillé vie le média partagé. Dans le cas du concentrateur de données DC, le dispositif électronique 300 comprend en outre un module de communication, par exemple un module 30N, permettant la connexion du dispositif électronique 300 au réseau 110. Un module 30N peut correspondre à un module de comptage d'une consommation électrique dans le cas où le dispositif électronique 300 est un compteur électrique communicant.

Le processeur CPU 301 est capable d'exécuter des instructions chargées dans la mémoire MEM 302, par exemple à partir du module de stockage STCK 304 ou d'un réseau de communication via le module réseau NET 303, ou d'un autre module de communication 30N par exemple. Lorsque le dispositif électronique 300 est mis sous tension, le processeur CPU 301 est capable de lire de la mémoire MEM 302 des instructions et de les exécuter. Ces instructions forment un programme d'ordinateur causant la mise en œuvre, par le processeur CPU 301, de tout ou partie des procédés et étapes décrits ci-avant, particulièrement dans la description de la Fig. 2. Ainsi, tout ou partie des procédés et étapes décrits ci-avant peut être implémenté sous forme logicielle par exécution d'un ensemble d'instructions par une machine programmable, telle qu'un DSP (« *Digital Signal Processor »* en anglais) ou un microcontrôleur. Tout ou partie des procédés et étapes décrits ici peut aussi être implémenté sous forme matérielle par une machine ou un composant dédié, tel qu'un FPGA (« *Field-Programmable Gate Array* » en anglais) ou un ASIC (« *Application-Specific Integrated Circuit* » en anglais). Les fonctions du dispositif électronique 300 peuvent être intégrées dans un compteur communicant ou un concentrateur d'un réseau de communication maillé par mise à jour d'un logiciel (mise à jour du « *firmware* » en anglais).

La **Fig. 4** illustre schématiquement l'architecture matérielle d'un dispositif électronique 400 correspondant au dispositif de contrôle SC d'un réseau 100 de communication maillé, le dispositif de contrôle SC étant adapté pour sélectionner une bande de fréquences dite optimale parmi une pluralité de bandes de fréquences, selon un mode de réalisation de l'invention.

Le dispositif électronique 400, ou dispositif de contrôle SC, est adapté pour :
- déterminer une information de qualité de fonctionnement du réseau 100 de communication maillé,
- si l'information de qualité de fonctionnement du réseau 100 de communication est inférieure à un premier seuil, alors :
- émettre à destination de chaque nœud ou dispositif électronique M1, M2, M3, ... M15 un premier message comprenant une instruction de réalisation d'un test de qualité de la pluralité de bandes de fréquences dans un ordre prédéterminé et une première information de synchronisation H pour la réalisation dudit test de qualité,
- collecter, à l'issue du test de qualité, pour chaque dispositif électronique M1, M2, M3 ... M15, des données de qualité associées à chaque bande de fréquences,
- déterminer, pour chaque bande de fréquences, un indicateur de qualité associé à la bande de fréquences à partir des données de qualité collectées, et,
- sélectionner une bande de fréquences dite optimale parmi la pluralité de bandes de fréquences, ladite bande de fréquences dite optimale étant la bande de fréquences associée à un indicateur de qualité de valeur maximale,
- lorsque la bande de fréquences dite optimale correspond à une deuxième bande de fréquences différente de la première bande de fréquences, alors :
- émettre à destination de chaque dispositif électronique M1, M2, M3, ... M15 un deuxième message comprenant une instruction d'utilisation de la deuxième bande de fréquences dite optimale en lieu de la première bande de fréquences.

Le dispositif électronique 400 comporte, reliés par un bus de communication : un processeur ou CPU (« *Central Processing Unit »* en anglais) 401 ; une mémoire MEM 402 de type RAM (« *Random Access Memory* » en anglais) et/ou ROM (« *Read Only Memory* » en anglais), un module réseau NET 403, un module de stockage STCK 404 de type stockage interne et possiblement d'autres modules 405 à 40N de différentes natures. Le module de stockage STCK 404 peut être de type disque dur HDD (« *Hard Disk Drive* » en anglais) ou SSD (« *Solid-State Drive* » en anglais), ou de type lecteur de support de stockage externe, tel un lecteur de cartes SD (« *Secure Digital* » en anglais). Le processeur CPU 401 peut enregistrer des données, ou informations, dans la mémoire MEM 402 ou dans le module de stockage STCK 404. Le processeur CPU 401 peut lire des données enregistrées dans la mémoire MEM 402 ou dans le module de stockage STCK 404. Ces données peuvent correspondre à des paramètres de configuration, des paramètres de qualité liés à des messages reçus ou à des informations reçues par exemple dans un message reçu via le module réseau NET 403, ou via un autre module de communication 40N. Le module réseau NET 403 permet la connexion du dispositif électronique 400 à un réseau de communication 110, par exemple de type Internet. Le module réseau NET 403 peut permettre la connexion du dispositif électronique 400 à un dispositif électronique tel qu'un Concentrateur de données DC, par exemple via une technologie de type Ethernet. Le module réseau NET 403 permet au dispositif électronique 400 d'envoyer, respectivement de recevoir, des messages à destination de, respectivement en provenance de, un ou plusieurs dispositifs électroniques, typiquement le concentrateur de données DC.

Le processeur CPU 401 est capable d'exécuter des instructions chargées dans la mémoire MEM 402, par exemple à partir du module de stockage STCK 404 ou d'un réseau de communication via le module réseau NET 403, ou d'un autre module de communication 40N par exemple. Lorsque le dispositif électronique 400 est mis sous tension, le processeur CPU 401 est capable de lire de la mémoire MEM 402 des instructions et de les exécuter. Ces instructions forment un programme d'ordinateur causant la mise en œuvre, par le processeur CPU 401, de tout ou partie des procédés et étapes décrits ci-avant, particulièrement dans la description de la Fig. 2. Ainsi, tout ou partie des procédés et étapes décrits ci-avant peut être implémenté sous forme logicielle par exécution d'un ensemble d'instructions par une machine programmable, telle qu'un DSP (« *Digital Signal Processor »* en anglais) ou un microcontrôleur. Tout ou partie des procédés et étapes décrits ici peut aussi être implémenté sous forme matérielle par une machine ou un composant dédié, tel qu'un FPGA (« *Field-Programmable Gate Array* » en anglais) ou un ASIC (« *Application-Specific Integrated Circuit* » en anglais). Les fonctions du dispositif électronique 400 peuvent être intégrées dans un dispositif de contrôle SC hébergé dans un système d'information d'un opérateur d'un réseau 100 par installation ou mise à jour d'un logiciel.

Les références à la norme (ou au protocole) G3-PLC dans le présent document sont faites pour les versions de la norme G3-PLC telle que publiée en avril 2015 et en mars 2017.

Seuls quinze nœuds ou dispositifs électroniques M1, M2, M3, ... M15 sont représentés dans la Fig. 1 à titre d'exemple, ceci n'est aucunement une limitation sur le nombre de nœuds du réseau 100. La présente invention peut être mise en œuvre avec une pluralité de nœuds.

Dans le présent document, il faut comprendre que lorsqu'un nœud bascule (d'une première bande de fréquences) vers une deuxième bande de fréquences cela signifie que ce nœud utilise ladite deuxième bande de fréquences (en lieu et place de la première bande de fréquences) pour l'émission et la réception de messages.

## Revendications

1. Système pour un réseau (100) de communication maillé permettant une sélection d'une bande de fréquences dite optimale parmi une pluralité de bandes de fréquences, le système étant **caractérisé en ce qu'**il comprend :
- une pluralité de dispositif électronique (DC, M1, M2, M3, ... M15) selon l'une des revendications 8 ou 9,
- un dispositif de contrôle (SC) selon l'une des revendications 10 à 12.

2. Procédé, pour un réseau (100) de communication maillé comprenant une pluralité de dispositifs électroniques (DC, M1, M2, M3, ... M15) connectés à un media partagé et utilisant une première bande de fréquences parmi une pluralité de bande de fréquences pour échanger des messages, chaque dispositif électronique étant adapté pour utiliser chaque bande de fréquences de la pluralité de bandes de fréquences, chaque dispositif électronique pouvant utiliser une seule bande de fréquences à la fois, et un dispositif de contrôle (SC), le procédé permettant une sélection d'une bande de fréquences dite optimale parmi la pluralité de bandes de fréquences, le procédé étant exécuté par chaque dispositif électronique et comprenant les étapes de :
- recevoir (204) en provenance du dispositif de contrôle un premier message comprenant une instruction de réalisation d'un test de qualité de la pluralité de bande de fréquences dans un ordre prédéterminé et une première information de synchronisation (H) pour la réalisation dudit test de qualité,
- déterminer (205) un moment de début du test de qualité en fonction de la première information de synchronisation, et,
- à partir dudit moment de début, utiliser (206) successivement, dans l'ordre prédéterminé, chaque bande de fréquences de la pluralité de bandes de fréquences pendant une durée prédéterminée associée à la bande de fréquences utilisée,
- enregistrer (206), en association avec chaque bande de fréquences utilisée, des données de qualité associées à des messages reçus par le dispositif électronique pendant chaque durée prédéterminée d'utilisation de la bande de fréquences,
- émettre (210) à destination du dispositif de contrôle un message comprenant les données de qualité associées à chaque bande de fréquences, et,
- lorsqu'un deuxième message est reçu comprenant une instruction de bascule vers une deuxième bande de fréquences dite optimale, utiliser (216) la deuxième bande de fréquences dite optimale en lieu de la première bande de fréquences pour émettre et recevoir des messages.

3. Le procédé selon la revendication précédente, le deuxième message comprenant une deuxième information de synchronisation (T), l'étape d'utiliser (216) la deuxième bande de fréquences optimale en lieu de la première bande de fréquences pour émettre et recevoir des messages est réalisé à partir d'un moment déterminé en fonction de la deuxième information de synchronisation.

4. Le procédé selon la revendication précédente, le deuxième message comprenant une troisième information de synchronisation (N), le procédé comprenant une étape ultérieure de :
- utiliser (224) de nouveau la première bande de fréquences pour émettre et recevoir des messages à partir d'un moment déterminé en fonction de la troisième information de synchronisation.

5. Le procédé selon la revendication précédente, le procédé comprenant, ultérieurement à l'étape d'utilisation (216) de la deuxième bande de fréquences dite optimale, les étapes de :
- recevoir un message comprenant un identifiant d'un dispositif électronique du réseau et une indication d'une troisième bande de fréquences parmi la pluralité de bande de fréquences,
- basculer vers la troisième bande de fréquences,
- envoyer vers le dispositif électronique correspondant à l'identifiant reçu un message comprenant une instruction d'utilisation de la bande de fréquences dite optimale et une instruction d'acquittement,
- à l'expiration d'un délai d'attente prédéfini ou bien à réception de l'acquittement, basculer vers la bande de fréquences dite optimale, puis,
- envoyer un message vers le dispositif de contrôle comprenant une information sur la bonne réception, ou non, de l'acquittement.

6. Procédé, pour un réseau (100) de communication maillé comprenant une pluralité de dispositifs électroniques (DC, M1, M2, M3 ... M15) connectés à un media partagé et utilisant une première bande de fréquences parmi une pluralité de bande de fréquences pour échanger des messages, chaque dispositif électronique étant adapté pour utiliser chaque bande de fréquences de la pluralité de bandes de fréquences, et un dispositif de contrôle (SC), le procédé permettant une sélection d'une bande de fréquences dite optimale parmi la pluralité de bandes de fréquences, le procédé étant exécuté par le dispositif de contrôle et comprenant les étapes de :
- déterminer (201) une information de qualité de fonctionnement du réseau de communication,
- si l'information de qualité de fonctionnement du réseau de communication est inférieure à un premier seuil, alors :
- émettre (203) à destination de chaque dispositif électronique un premier message comprenant une instruction de réalisation d'un test de qualité de la pluralité de bande de fréquences dans un ordre prédéterminé et une première information de synchronisation (H) pour la réalisation dudit test de qualité,
- collecter (210), à l'issu du test de qualité, pour chaque dispositif électronique, des données de qualité associées à chaque bande de fréquences,
- déterminer (211), pour chaque bande de fréquences, un indicateur de qualité associé à la bande de fréquences à partir des données de qualité collectées, et,
- sélectionner (212) une bande de fréquences dite optimale parmi la pluralité de bandes de fréquences, ladite bande de fréquences dite optimale étant la bande de fréquences associée à un indicateur de qualité de valeur maximale,
- lorsque la bande de fréquences dite optimale correspond à une deuxième bande de fréquences différente de la première bande de fréquences, alors :
- émettre (213) à destination de chaque dispositif électronique un deuxième message comprenant une instruction d'utilisation de la deuxième bande de fréquences dite optimale en lieu de la première bande de fréquences.

7. Le procédé selon la revendication précédente, le deuxième message comprenant une deuxième information de synchronisation (T) et une troisième information de synchronisation (N), la deuxième information de synchronisation permettant de définir un moment de début d'utilisation de la deuxième bande de fréquences par chaque dispositif électronique, la troisième information de synchronisation permettant de définir un moment, pour chaque dispositif électronique de retour à l'utilisation de la première bande de fréquences, le procédé comprenant les étapes ultérieures de :
- déterminer (220), entre le moment de début d'utilisation de la deuxième bande de fréquences et le moment de retour à l'utilisation de la première bande de fréquences, une information de qualité de fonctionnement du réseau de communication, et,
- lorsque ladite information de qualité de fonctionnement du réseau de communication est supérieure à un deuxième seuil, alors :
- émettre (222) à destination de chaque dispositif électronique un troisième message comprenant une instruction d'annulation de réutilisation de la première bande de fréquences au moment défini par la troisième information de synchronisation.

8. Dispositif électronique (DC, M1, M2, M3, ... M15) d'un réseau (100) de communication maillé comprenant une pluralité de dispositifs électroniques connectés à un media partagé et utilisant une première bande de fréquences parmi une pluralité de bande de fréquences pour échanger des messages, le dispositif électronique étant adapté pour utiliser chaque bande de fréquences de la pluralité de bandes de fréquences, le dispositif électronique pouvant utiliser une seule bande de fréquences à la fois, le dispositif électronique étant adapté pour :
- recevoir (204) en provenance d'un dispositif de contrôle (SC) un premier message comprenant une instruction de réalisation d'un test de qualité de la pluralité de bande de fréquences dans un ordre prédéterminé et une première information de synchronisation (H) pour la réalisation dudit test de qualité,
- déterminer (205) un moment de début du test de qualité en fonction de la première information de synchronisation, et,
- à partir dudit moment de début, utiliser (206) successivement, dans l'ordre prédéterminé, chaque bande de fréquences de la pluralité de bandes de fréquences pendant une durée prédéterminée associée à la bande de fréquences utilisée,
- émettre (206) des messages à destination de l'ensemble des dispositifs électroniques,
- enregistrer (206), en association avec chaque bande de fréquences utilisée, des données de qualité associées à des messages reçus par le dispositif électronique pendant chaque durée prédéterminée d'utilisation de la bande de fréquences,
- émettre (210) à destination du dispositif de contrôle un message comprenant les données de qualité associées à chaque bande de fréquences, et,
- lorsqu'un deuxième message est reçu comprenant une instruction de bascule vers une deuxième bande de fréquences dite optimale, utiliser (216) la deuxième bande de fréquences dite optimale en lieu de la première bande de fréquences pour émettre et recevoir des messages.

9. Dispositif électronique selon la revendication précédente, le deuxième message comprenant une deuxième information de synchronisation (T), le dispositif électronique étant adapté pour utiliser (216) la deuxième bande de fréquences optimale en lieu de la première bande de fréquences pour émettre et recevoir des messages à partir d'un moment déterminé en fonction de la deuxième information de synchronisation.

10. Dispositif de contrôle (SC) d'un réseau (100) de communication maillé comprenant une pluralité de dispositifs électroniques (M1, M2, M3, ... M15) connectés à un media partagé et utilisant une première bande de fréquences parmi une pluralité de bande de fréquences pour échanger des messages, le dispositif de contrôle étant adapté pour utiliser chaque bande de fréquences de la pluralité de bandes de fréquences, le dispositif de contrôle pouvant utiliser une seule bande de fréquences à la fois, le dispositif de contrôle étant adapté pour :
- émettre (203) à destination de chaque dispositif électronique un premier message comprenant une instruction de réalisation d'un test de qualité de la pluralité de bande de fréquences dans un ordre prédéterminé et une première information de synchronisation (H) pour la réalisation dudit test de qualité,
- collecter (210), à l'issu du test de qualité, pour chaque dispositif électronique, des données de qualité associées à chaque bande de fréquences,
- déterminer (211), pour chaque bande de fréquences, un indicateur de qualité associé à la bande de fréquences à partir des données de qualité collectées, et,
- sélectionner (212) une bande de fréquences dite optimale parmi la pluralité de bandes de fréquences, ladite bande de fréquences dite optimale étant la bande de fréquences associée à un indicateur de qualité de valeur maximale,
- lorsque la bande de fréquences dite optimale correspond à une deuxième bande de fréquences différente de la première bande de fréquences, alors :
- émettre (213) à destination de chaque dispositif électronique un deuxième message comprenant une instruction d'utilisation de la deuxième bande de fréquences dite optimale en lieu de la première bande de fréquences.

11. Dispositif de contrôle selon la revendication précédente, le dispositif de contrôle étant adapté en outre pour :
- déterminer (201) une information de qualité de fonctionnement du réseau de communication maillé.

12. Dispositif de contrôle selon la revendication 10 ou 11, le deuxième message comprenant une deuxième information de synchronisation (T) et une troisième information de synchronisation (N), la deuxième information de synchronisation permettant de définir un moment de début d'utilisation de la deuxième bande de fréquences par chaque dispositif électronique, la troisième information de synchronisation permettant de définir un moment, pour chaque dispositif électronique de retour à l'utilisation de la première bande de fréquences, le dispositif de contrôle étant en outre adapté pour :
- déterminer (220), entre le moment de début d'utilisation de la deuxième bande de fréquences et le moment de retour à l'utilisation de la première bande de fréquences, une information de qualité de fonctionnement du réseau de communication, et,
- lorsque ladite information de qualité de fonctionnement du réseau de communication est supérieure à un deuxième seuil, alors :
- émettre (222) à destination de chaque dispositif électronique un troisième message comprenant une instruction d'annulation de réutilisation de la première bande de fréquences au moment défini par la troisième information de synchronisation.

13. Programme d'ordinateur, **caractérisé en ce qu'**il comprend des instructions pour mettre en œuvre, par un processeur d'un dispositif électronique (DC, M1, M2, M3, ... M15) d'un réseau (100) de communication maillé connecté à un media partagé et utilisant une première bande de fréquences parmi une pluralité de bande de fréquences pour échanger des messages, le dispositif électronique étant adapté pour utiliser chaque bande de fréquences de la pluralité de bandes de fréquences, un procédé permettant une sélection d'une bande de fréquences dite optimale parmi la pluralité de bandes de fréquences selon l'une des revendications 2 à 5, lorsque le programme d'ordinateur est exécuté par le processeur.

14. Support d'enregistrement sur lequel est stocké le programme d'ordinateur selon la revendication précédente.

15. Programme d'ordinateur, **caractérisé en ce qu'**il comprend des instructions pour mettre en œuvre, par un processeur d'un dispositif de contrôle (SC) d'un réseau (100) de communication maillé comprenant une pluralité de dispositifs électroniques (DC, M1, M2, M3, ... M15) connectés à un media partagé et utilisant une première bande de fréquences parmi une pluralité de bande de fréquences pour échanger des messages, chaque dispositif électronique étant adapté pour utiliser chaque bande de fréquences de la pluralité de bandes de fréquences, un procédé permettant une sélection d'une bande de fréquences dite optimale parmi la pluralité de bandes de fréquences selon l'une des revendications 6 ou 7, lorsque le programme d'ordinateur est exécuté par le processeur.

16. Support d'enregistrement sur lequel est stocké le programme d'ordinateur selon la revendication précédente.

## Patentansprüche

1. System für ein Maschen-Kommunikationsnetz (100), das eine Auswahl eines optimal genannten Frequenzbandes aus einer Vielzahl von Frequenzbändern ermöglicht, wobei das System **dadurch gekennzeichnet ist, dass** es umfasst:
- eine Vielzahl elektronischer Vorrichtungen (DC, M1, M2, M3, ... M15) nach einem der Ansprüche 8 oder 9,
- eine Steuervorrichtung (SC) nach einem der Ansprüche 10 bis 12.

2. Verfahren für ein Maschen-Kommunikationsnetz (100), umfassend eine Vielzahl elektronischer Vorrichtungen (DC, M1, M2, M3, ... M15), die mit einem gemeinsam genutzten Medium verbunden sind und ein erstes Frequenzband aus einer Vielzahl von Frequenzbändern zum Austausch von Nachrichten nutzen, wobei jede elektronische Vorrichtung dazu geeignet ist, jedes Frequenzband der Vielzahl von Frequenzbändern zu nutzen, wobei jede elektronische Vorrichtung ein einziges Frequenzband auf einmal nutzen kann, und eine Steuervorrichtung (SC), wobei das Verfahren eine Auswahl eines als optimal bezeichneten Frequenzbandes aus der Vielzahl von Frequenzbändern ermöglicht, wobei das Verfahren durch jede elektronische Vorrichtung ausgeführt wird und die folgenden Schritte umfasst:
- Empfangen (204) einer ersten Nachricht, umfassend eine Anweisung zur Durchführung eines Qualitätstests der Vielzahl von Frequenzbändern in einer vorgegebenen Reihenfolge und eine erste Synchronisationsinformation (H) für die Durchführung des Qualitätstests, von der Steuervorrichtung,
- Bestimmen (205) eines Anfangszeitpunkts des Qualitätstests in Abhängigkeit von der ersten Synchronisationsinformation und
- ab dem Anfangszeitpunkt aufeinanderfolgendes Nutzen (206) jedes Frequenzbandes der Vielzahl von Frequenzbändern während einer vorgegebenen Dauer, die dem genutzten Frequenzband zugeordnet ist,
- Speichern (206) von Qualitätsdaten zu den Nachrichten, die von der elektronischen Vorrichtung während der vorgegebenen Nutzungsdauer des Frequenzbandes empfangen wurden, in Zuordnung zu jedem genutzten Frequenzband,
- Senden (210) einer Nachricht, umfassend die Qualitätsdaten zu jedem Frequenzband, an die Steuervorrichtung und
- wenn eine zweite Nachricht empfangen wird, umfassend eine Anweisung zur Umschaltung auf ein als optimal bezeichnetes zweites Frequenzband, Nutzen (216) des als optimal bezeichneten zweiten Frequenzbandes anstelle des ersten Frequenzbandes zum Senden und Empfangen von Nachrichten.

3. Verfahren nach dem vorhergehenden Anspruch, wobei die zweite Nachricht eine zweite Synchronisationsinformation (T) umfasst, wobei der Schritt des Nutzens (216) des optimalen zweiten Frequenzbandes anstelle des ersten Frequenzbandes zum Senden und Empfangen von Nachrichten ab dem Zeitpunkt durchgeführt wird, der in Abhängigkeit von der zweiten Synchronisationsinformation bestimmt wird.

4. Verfahren nach dem vorhergehenden Anspruch, wobei die zweite Nachricht eine dritte Synchronisationsinformation (N) umfasst, wobei das Verfahren einen späteren folgenden Schritt umfasst:
- erneutes Nutzen (224) des ersten Frequenzbandes zum Senden und Empfangen von Nachrichten ab dem Zeitpunkt, der in Abhängigkeit von der dritten Synchronisationsinformation bestimmt wird.

5. Verfahren nach dem vorhergehenden Anspruch, wobei das Verfahren später im Schritt des Nutzens (216) des als optimal bezeichneten zweiten Frequenzbandes die folgenden Schritte umfasst:
- Empfangen einer Nachricht, umfassend eine Kennung einer elektronischen Vorrichtung des Netzes und eine Angabe eines dritten Frequenzbandes aus der Vielzahl von Frequenzbändern,
- Umschalten auf das dritte Frequenzband,
- Senden einer Nachricht, umfassend eine Anweisung zur Nutzung des als optimal bezeichneten Frequenzbandes und eine Anweisung zur Bestätigung, an die elektronische Vorrichtung, die der empfangenen Kennung entspricht,
- nach Ablauf einer vorgegebenen Wartezeit oder bei Empfang der Bestätigung Umschalten auf das als optimal bezeichnete Frequenzband, anschließend
- Senden einer Nachricht, umfassend eine Information über den guten Empfang oder den Nichtempfang der Bestätigung an die Steuervorrichtung.

6. Verfahren für ein Maschen-Kommunikationsnetz (100), umfassend eine Vielzahl elektronischer Vorrichtungen (DC, M1, M2, M3, ... M15), die mit einem gemeinsam genutzten Medium verbunden sind und ein erstes Frequenzband aus einer Vielzahl von Frequenzbändern zum Austausch von Nachrichten nutzen, wobei jede elektronische Vorrichtung dazu geeignet ist, jedes Frequenzband der Vielzahl von Frequenzbändern zu nutzen, und eine Steuervorrichtung (SC), wobei das Verfahren eine Auswahl eines als optimal bezeichneten Frequenzbandes aus der Vielzahl von Frequenzbändern ermöglicht, wobei das Verfahren durch die Steuervorrichtung ausgeführt wird und die folgenden Schritte umfasst:
- Bestimmen (201) einer Information zur Funktionsqualität des Kommunikationsnetzes,
- wenn die Information zur Funktionsqualität des Kommunikationsnetzes unter einem ersten Schwellenwert liegt, dann:
- Senden (203) einer ersten Nachricht, umfassend eine Anweisung zur Durchführung eines Qualitätstests der Vielzahl von Frequenzbändern in einer vorgegebenen Reihenfolge und eine erste Synchronisationsinformation (H) für die Durchführung des Qualitätstests, an jede elektronische Vorrichtung,
- Sammeln (210) von Qualitätsdaten zu jedem Frequenzband für jede elektronische Vorrichtung nach dem Qualitätstest,
- Bestimmen (211) eines Qualitätsindikators zu dem Frequenzband für jedes Frequenzband anhand der gesammelten Qualitätsdaten und
- Auswählen (212) eines als optimal bezeichneten Frequenzbands aus der Vielzahl von Frequenzbändern, wobei das als optimal bezeichnete Frequenzband das Frequenzband ist, das mit einem Qualitätsindikator von maximalem Wert verbunden ist,
- wenn das als optimal bezeichnete Frequenzband einem zweiten Frequenzband entspricht, das vom ersten Frequenzband verschieden ist, dann:
- Senden (213) einer zweiten Nachricht, umfassend eine Anweisung zur Nutzung des als optimal bezeichneten zweiten Frequenzbandes anstelle des ersten Frequenzbandes, an jede elektronische Vorrichtung.

7. Verfahren nach dem vorhergehenden Anspruch, wobei die zweite Nachricht eine zweite Synchronisationsinformation (T) und eine dritte Synchronisationsinformation (N) umfasst, wobei die zweite Synchronisationsinformation ermöglicht, einen Anfangszeitpunkt der Nutzung des zweiten Frequenzbandes durch jede elektronische Vorrichtung zu definieren, die dritte Synchronisationsinformation ermöglicht, für jede elektronische Vorrichtung einen Zeitpunkt der Rückkehr zur Nutzung des ersten Frequenzbandes zu definieren, wobei das Verfahren die folgenden späteren Schritte umfasst:
- Bestimmen (220) einer Information zur Funktionsqualität des Kommunikationsnetzes zwischen dem Anfangszeitpunkt der Nutzung des zweiten Frequenzbandes und dem Zeitpunkt der Rückkehr zur Nutzung des ersten Frequenzbandes und
- wenn die Information zur Funktionsqualität des Kommunikationsnetzes über einem zweiten Schwellenwert liegt, dann:
- Senden (222) einer dritten Nachricht, umfassend eine Anweisung zur Aufhebung der erneuten Nutzung des ersten Frequenzbandes zu dem von der dritten Synchronisationsinformation definierten Zeitpunkt, an jede elektronische Vorrichtung.

8. Elektronische Vorrichtung (DC, M1, M2, M3, ... M15) eines Maschen-Kommunikationsnetzes (100), umfassend eine Vielzahl elektronischer Vorrichtungen, die mit einem gemeinsam genutzten Medium verbunden sind und ein erstes Frequenzband aus einer Vielzahl von Frequenzbändern zum Austausch von Nachrichten nutzen, wobei die elektronische Vorrichtung dazu geeignet ist, jedes Frequenzband aus der Vielzahl von Frequenzbändern zu nutzen, wobei die elektronische Vorrichtung ein einziges Frequenzband auf einmal nutzen kann, wobei die elektronische Vorrichtung zu Folgendem geeignet ist:
- Empfangen (204) einer ersten Nachricht, umfassend eine Anweisung zur Durchführung eines Qualitätstests der Vielzahl von Frequenzbändern in einer vorgegebenen Reihenfolge und eine erste Synchronisationsinformation (H) für die Durchführung des Qualitätstests, von der Steuervorrichtung (SC),
- Bestimmen (205) eines Anfangszeitpunkts des Qualitätstests in Abhängigkeit von der ersten Synchronisationsinformation und
- ab dem Anfangszeitpunkt aufeinanderfolgendes Nutzen (206) jedes Frequenzbandes der Vielzahl von Frequenzbändern während einer vorgegebenen Dauer, die dem genutzten Frequenzband zugeordnet ist,
- Senden (206) von Nachrichten an die Gruppe der elektronischen Vorrichtungen,
- Speichern (206) von Qualitätsdaten zu den Nachrichten, die von der elektronischen Vorrichtung während jeder vorgegebenen Nutzungsdauer des Frequenzbandes empfangen wurden, in Zuordnung zu jedem genutzten Frequenzband,
- Senden (210) einer Nachricht, umfassend die Qualitätsdaten zu jedem Frequenzband, an die Steuervorrichtung und
- wenn eine zweite Nachricht empfangen wird, umfassend eine Anweisung zur Umschaltung auf ein als optimal bezeichnetes zweites Frequenzband, Nutzen (216) des als optimal bezeichneten zweiten Frequenzbandes anstelle des ersten Frequenzbandes zum Senden und Empfangen von Nachrichten.

9. Elektronische Vorrichtung nach dem vorhergehenden Anspruch, wobei die zweite Nachricht eine zweite Synchronisationsinformation (T) umfasst, wobei die elektronische Vorrichtung dazu geeignet ist, das optimale zweite Frequenzband anstelle des ersten Frequenzbandes zu nutzen (216), um ab einem Zeitpunkt, der in Abhängigkeit von der zweiten Synchronisationsinformation bestimmt wird, Nachrichten zu senden und zu empfangen.

10. Steuervorrichtung (SC) eines Maschen-Kommunikationsnetzes (100), umfassend eine Vielzahl elektronischer Vorrichtungen (M1, M2, M3, ... M15), die mit einem gemeinsam genutzten Medium verbunden sind und ein erstes Frequenzband aus einer Vielzahl von Frequenzbändern zum Austausch von Nachrichten nutzen, wobei die Steuervorrichtung dazu geeignet ist, jedes Frequenzband der Vielzahl von Frequenzbändern zu nutzen, wobei die Steuervorrichtung ein einziges Frequenzband auf einmal nutzen kann, wobei die Steuervorrichtung zu Folgendem geeignet ist:
- Senden (203) einer ersten Nachricht, umfassend eine Anweisung zur Durchführung eines Qualitätstests der Vielzahl von Frequenzbändern in einer vorgegebenen Reihenfolge und eine erste Synchronisationsinformation (H) für die Durchführung des Qualitätstests, an jede elektronische Vorrichtung,
- Sammeln (210) von Qualitätsdaten zu jedem Frequenzband für jede elektronische Vorrichtung nach dem Qualitätstest,
- Bestimmen (211) eines Qualitätsindikators zu dem Frequenzband für jedes Frequenzband anhand der gesammelten Qualitätsdaten und
- Auswählen (212) eines als optimal bezeichneten Frequenzbandes aus der Vielzahl von Frequenzbändern, wobei das als optimal bezeichnete Frequenzband das Frequenzband ist, das mit einem Qualitätsindikator von maximalem Wert verbunden ist,
- wenn das als optimal bezeichnete Frequenzband einem zweiten Frequenzband entspricht, das vom ersten Frequenzband verschieden ist, dann:
- Senden (213) einer zweiten Nachricht, umfassend eine Anweisung zur Nutzung des als optimal bezeichneten zweiten Frequenzbandes anstelle des ersten Frequenzbandes, an jede elektronische Vorrichtung.

11. Steuervorrichtung nach dem vorhergehenden Anspruch, wobei die Steuervorrichtung außerdem zu Folgendem geeignet ist:
- Bestimmen (201) einer Information zur Funktionsqualität des Kommunikationsnetzes.

12. Steuervorrichtung nach Anspruch 10 oder 11, wobei die zweite Nachricht eine zweite Synchronisationsinformation (T) und eine dritte Synchronisationsinformation (N) umfasst, wobei die zweite Synchronisationsinformation ermöglicht, einen Anfangszeitpunkt der Nutzung des zweiten Frequenzbandes durch jede elektronische Vorrichtung zu definieren, die dritte Synchronisationsinformation ermöglicht, für jede elektronische Vorrichtung einen Zeitpunkt der Rückkehr zur Nutzung des ersten Frequenzbandes zu definieren, wobei die Steuervorrichtung außerdem zu Folgendem geeignet ist:
- Bestimmen (220) einer Information zur Funktionsqualität des Kommunikationsnetzes zwischen dem Anfangszeitpunkt der Nutzung des zweiten Frequenzbandes und dem Zeitpunkt der Rückkehr zur Nutzung des ersten Frequenzbandes und
- wenn die Information zur Funktionsqualität des Kommunikationsnetzes über einem zweiten Schwellenwert liegt, dann:
- Senden (222) einer dritten Nachricht, umfassend eine Anweisung zur Aufhebung der erneuten Nutzung des ersten Frequenzbandes zu dem von der dritten Synchronisationsinformation definierten Zeitpunkt, an jede elektronische Vorrichtung.

13. Computerprogramm, **dadurch gekennzeichnet, dass** es Anweisungen zur Umsetzung durch einen Prozessor einer elektronischen Vorrichtung (DC, M1, M2, M3, ... M15) eines Maschen-Kommunikationsnetzes (100) umfasst, die mit einem gemeinsam genutzten Medium verbunden ist und ein erstes Frequenzband aus einer Vielzahl von Frequenzbändern zum Austausch von Nachrichten nutzt, wobei die elektronische Vorrichtung dazu geeignet ist, jedes Frequenzband der Vielzahl von Frequenzbändern zu nutzen, wobei ein Verfahren eine Auswahl eines als optimal bezeichneten Frequenzbandes aus der Vielzahl von Frequenzbändern nach einem der Ansprüche 2 bis 5 ermöglicht, wenn das Computerprogramm durch den Prozessor ausgeführt wird.

14. Speichermedium, auf dem das Computerprogramm nach dem vorhergehenden Anspruch gespeichert ist.

15. Computerprogramm, **dadurch gekennzeichnet, dass** es Anweisungen zur Umsetzung durch einen Prozessor einer Steuervorrichtung (SC) eines Maschen-Kommunikationsnetzes (100) umfasst, umfassend eine Vielzahl elektronischer Vorrichtungen (DC, M1, M2, M3, ... M15), die mit einem gemeinsam genutzten Medium verbunden sind und ein erstes Frequenzband aus einer Vielzahl von Frequenzbändern zum Austausch von Nachrichten nutzen, wobei jede elektronische Vorrichtung dazu geeignet ist, jedes Frequenzband der Vielzahl von Frequenzbändern zu nutzen, wobei ein Verfahren eine Auswahl eines als optimal bezeichneten Frequenzbandes aus der Vielzahl von Frequenzbändern nach einem der Ansprüche 6 oder 7 ermöglicht, wenn das Computerprogramm durch den Prozessor ausgeführt wird.

16. Speichermedium, auf dem das Computerprogramm nach dem vorhergehenden Anspruch gespeichert ist.

## Claims

1. System for the mesh communication network (100) allowing selection of an optimum frequency band from a plurality of frequency bands, the system being **characterised in that** it comprises:
- a plurality of electronic devices (DC, M1, M2, M3, ...M15) according to claim 8 or 9,
- a control device (SC) according to one of claims 10 to 12.

2. Method for a mesh communication network (100) comprising a plurality of electronic devices (DC, M1, M2, M3, ...M15) connected to a shared medium and using a first frequency band among a plurality of frequency bands for exchanging messages, each electronic device being suitable for using each frequency band in the plurality of frequency bands, each electronic device being configured to use only one frequency band at a time, and a corresponding control device (SC), the method allowing selection of an optimum frequency band from the plurality of frequency bands, the method being executed by each electronic device and comprising the steps of:
- receiving (204), from the corresponding control device, a first message comprising an instruction to perform a quality test on the plurality of frequency bands in a predetermined order and a first synchronization information (H) for performing said quality test,
- determining (205) a start time of the quality test according to the first synchronization information, and
- as from the start time, successively using (206), in the predetermined order, each frequency band in the plurality of frequency bands for a predetermined period associated with the frequency band used,
- recording (206), in association with each frequency band used, quality data associated with messages received during each predetermined period of use of the frequency band,
- sending (210), to the corresponding control device, a message comprising the quality data associated with each frequency band, and,
- when a second message is received comprising an instruction to switch to a second frequency band, using (216) the second frequency band instead of the first frequency band for sending and receiving messages.

3. The method according the preceding claim, the second message comprising second synchronization information (T), the step of using (216) the second frequency band instead of the first frequency band for sending and receiving messages is performed as from a time determined according to the second synchronization information.

4. The method according to the preceding claim, the second message comprising third synchronization information (N), the message comprising a subsequent step of:
- once again using (224) the first frequency band for sending and receiving messages as from a time determined according to the third synchronization information.

5. The method according to the preceding claim, comprising: subsequently to the step of using (216) the second frequency band:
- receiving a message comprising an identifier of an electronic device in the network and an indication of a third frequency band among the plurality of frequency bands,
- switching to the third frequency band,
- sending, to the electronic device corresponding to the identifier received, a message comprising an instruction to use the optimum frequency band and an acknowledgement instruction,
- at the expiry of a predefined waiting time or on reception of the acknowledgement instruction, switching to the optimum frequency band, and then,
- sending a message to the corresponding control device comprising information on the correct reception, or not, of the acknowledgement instruction.

6. Method, for a mesh communication network (100) comprising a plurality of electronic devices (DC, M1, M2, M3, ...M15) connected to a shared medium and using a first frequency band among a plurality of frequency bands for exchanging messages, each electronic device being suitable for using each frequency band in the plurality of frequency bands, and a control device (SC), the method making it possible to select an optimum frequency band among the plurality of frequency bands, the method being executed by the control device and comprising the steps of:
- determining (201) information on operating quality of the communication network,
- if the information on operating quality of the communication network is below a first threshold, then:
- sending (203), to each electronic device, a first message comprising an instruction to perform a quality test on the plurality of frequency bands in a predetermined order and first synchronization information (H) for performing said quality test,
- collecting (210), at the end of the quality test, for each electronic device, quality data associated with each frequency band,
- determining (211), for each frequency band, a quality indicator associated with the frequency band from the quality data collected, and
- selecting (212) the optimum frequency band among the plurality of frequency bands, said optimum frequency band being the frequency band associated with a quality indicator of maximum value,
- when the optimum frequency band corresponds to a second frequency band different from the first frequency band, then:
- sending (213), to each electronic device, a second message comprising an instruction to use the second frequency band instead of the first frequency band.

7. The method according to the preceding claim, the second message comprising second synchronization information (T) and a third synchronization information (N), the second synchronization information making it possible to define a start time of use of the second frequency band by each electronic device, the third synchronization information making it possible to define a time for each electronic device to return to the use of the first frequency band, the method further comprises:
- determining (220), between the start time of use of the second frequency band and the time of return to the use of the first frequency band, information on the operating quality of the communication network, and
- when said information on operating quality of the communication network is higher than a second threshold, then:
- sending (222), to each electronic device, a third message comprising an instruction for cancellation of re-use of the first frequency band at the time defined by the third synchronization information.

8. Electronic device (DC, M1, M2, M3, ...M15) of a mesh communication network (100) comprising a plurality of electronic devices connected to a shared medium and using a first frequency band among a plurality of frequency bands for exchanging messages, the electronic device being suitable for using each frequency band in the plurality of frequency bands, the electronic device being configured to use only one frequency band at a time, the electronic device being suitable for:
- receiving (204), from a control device (SC), a first message comprising an instruction for performing a quality test on the plurality of frequency bands in a predetermined order and first synchronization information (H) for performing said quality test,
- determining (205) a start time of the quality test according to the first synchronization information, and
- as from said start time, successively using (206), in the predetermined order, each frequency band in the plurality of frequency bands for a predetermined period associated with the frequency band used,
- sending (206) messages to all the electronic devices,
- recording (206), in association with each frequency band used, quality data associated with messages received by the electronic device during each predetermined period of use of the frequency band,
- sending (210), to the control device, a message comprising the quality data associated with each frequency band, and
- when a second message is received comprising an instruction to switch to a second frequency band, using (216) the second frequency band instead of the first frequency band for sending and receiving messages.

9. Electronic device according to the preceding claim, the second message comprising second synchronization information (T), the electronic device being suitable for using the second frequency band instead of the first frequency band for sending and receiving messages as from a time determined according to the second synchronization information.

10. Control device (SC) for a mesh communication network (100) comprising a plurality of electronic devices (DC, M1, M2, M3, ...M15) connected to a shared medium and using a first frequency band among a plurality of frequency bands for exchanging messages, the control device being suitable for using each frequency band in the plurality of frequency bands, the control device being configured to use only one frequency band at a time, the control device being suitable for:
- sending, (203) to each electronic device, a first message comprising an instruction to perform a quality test on the plurality of frequency bands in a predetermined order and first synchronization information (H) for performing said quality test,
- collecting (210), at the end of the quality test, for each electronic device, quality data associated with each frequency band,
- determining (211), for each frequency band, a quality indicator associated with the frequency band from the quality data collected, and
- selecting (212) an optimum frequency band among the plurality of frequency bands, said optimum frequency band being the frequency band associated with a quality indicator of maximum value,
- when the optimum frequency band corresponds to a second frequency band different from the first frequency band, then:
- sending (213), to each electronic device, a second message comprising an instruction to use the second frequency band instead of the first frequency band.

11. Control device according to the preceding claim, the control device further being suitable for:
- determining (201) information on operating quality of the mesh communication network.

12. Control device according to claim 10 or 11, the second message comprising second synchronization information (T) and third synchronization information (N), the second synchronization information defining a start time of use of the second frequency band by each electronic device, the third synchronization information defining a time for each electronic device to return to the use of the first frequency band, the control device is further suitable for:
- determining (220), between the start time of use of the second frequency band and the time of return to the use of the first frequency band, information on the operating quality of the communication network, and
- when said information on operating quality of the communication network is higher than a second threshold, then:
- sending (222), to each electronic device, a third message comprising an instruction for cancellation of re-use of the first frequency band at the time defined by the third synchronization information.

13. Computer program, **characterised in that** it comprises instructions for the implementation, by a processor of an electronic device (DC, M1, M2, M3, ... M15) of a mesh communication network (100) connected to a shared medium and using a first frequency band among a plurality of frequency bands for exchanging messages, the electronic device being suitable for using each frequency band in the plurality of frequency bands, a method for selecting a so-called optimum frequency band among the plurality of frequency bands according to any of claims 2 to 5, when the computer program is executed by the processor.

14. Recording medium on which the computer program according to the preceding claim is stored.

15. Computer program, **characterised in that** it comprises instructions for the implementation, by a processor of a control device (SC) of a mesh communication network (100) comprising a plurality of electronic devices (DC, M1, M2, M3, ... M15) connected to a shared medium and using a first frequency band among a plurality of frequency bands for exchanging messages, each electronic device being suitable for using each frequency band in the plurality of frequency bands, a method allowing a selection of a so-called optimum frequency band among the plurality of frequency bands according to either claim 6 or claim 7, when the computer program is executed by the processor.

16. Recording medium on which the computer program according to the preceding claim is stored.
